(19) Europäisches Patentamt
European Patent Office
Office européen des brevets

(11) **EP 2 432 669 B1**

(12) **EUROPÄISCHE PATENTSCHRIFT**

(45) Veröffentlichungstag und Bekanntmachung des Hinweises auf die Patenterteilung:
**27.03.2019  Patentblatt 2019/13**

(21) Anmeldenummer: **09763838.1**

(22) Anmeldetag: **18.11.2009**

(51) Int Cl.:
*B60T 8/17* *(2006.01)*          *B60T 8/32* *(2006.01)*
*G01P 3/42* *(2006.01)*          *F16D 66/02* *(2006.01)*
*B61L 25/02* *(2006.01)*         *B61L 15/00* *(2006.01)*

(86) Internationale Anmeldenummer:
**PCT/EP2009/008211**

(87) Internationale Veröffentlichungsnummer:
**WO 2010/057623 (27.05.2010 Gazette 2010/21)**

(54) **VORRICHTUNG UND VERFAHREN FÜR EIN SCHIENENFAHRZEUG**

DEVICE AND METHOD FOR A RAIL VEHICLE

DISPOSITIF ET PROCÉDÉ POUR UN VÉHICULE FERROVIAIRE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **19.11.2008  DE 102008057966**
**08.05.2009  DE 102009020428**

(43) Veröffentlichungstag der Anmeldung:
**28.03.2012  Patentblatt 2012/13**

(73) Patentinhaber: **ASTO Telematics GmbH**
**81377 München (DE)**

(72) Erfinder:
• **SCHEIBLE, Rolf-Stefan**
**60596 Frankfurt am Main (DE)**
• **GENSELEITER, Kurt**
**82319 Starnberg (DE)**
• **LEITEL, Holger**
**82049 Pullach (DE)**
• **BEHRENDS, Victor**
**96114 Hirschaid (DE)**

(74) Vertreter: **Grape & Schwarzensteiner**
**Patentanwälte**
**Sebastiansplatz 7**
**80331 München (DE)**

(56) Entgegenhaltungen:
| | |
|---|---|
| EP-A1- 0 391 047 | EP-A1- 0 976 638 |
| EP-A1- 1 013 533 | EP-A1- 1 197 419 |
| EP-A2- 1 384 638 | EP-A2- 1 465 358 |
| WO-A1-2004/022406 | WO-A1-2005/105536 |
| DE-A1- 10 107 571 | DE-B3-102006 005 206 |
| FR-A- 1 076 317 | US-A- 2 024 669 |
| US-A- 6 006 868 | US-A1- 2006 290 478 |
| US-A1- 2007 152 107 | |

## Beschreibung

Die vorliegende Erfindung betrifft eine Vorrichtung zur Überwachung eines Schienenfahrzeugs gemäß dem Oberbegriff von Anspruch 1. Eine solche Vorrichtung ist aus der WO 2004/022406 A bekannt. Die Erfindung betrifft ferner ein Verfahren zur Überwachung eines Schienenfahrzeugs und ein Verfahren zum Nachrüsten eines Schienenfahrzeugs mit einer Vorrichtung der genannten Art.

Schienenfahrzeuge bieten allgemein zahlreiche Möglichkeiten, um Mess- oder Prüfeinrichtungen an diesen zu befestigen. Nahezu alle diese Möglichkeiten, erfordern eine aufwändige Anpassung der Befestigungsmechanismen, bei unterschiedlichen Schienenfahrzeugtypen. Zudem erfordern viele Mess- und Prüfeinrichtungen einen möglichst ungehinderten Zugang zum oder in das Schienenfahrzeug hinein und vom Schienenfahrzeug weg oder aus diesem hinaus, bspw. um Daten per Funk zu übertragen. Allgemein werden daher Mess- und/oder Prüfeinrichtungen an einem oberen äußeren Bereich des Schienenfahrzeugs befestigt, was jedoch aufgrund unterschiedlichster und ggf. wechselnder Aufbauten auf dem Schienenfahrzeug mit großen Schwierigkeiten verbunden ist. Gewisse Befestigungsmöglichkeiten, beispielsweise am Fahrwerk, kommen nur unter zusätzlichen Sicherheitsprüfungen in Betracht, was diese Befestigungsmechanismen teuer und unattraktiv macht.

Der Erfindung liegt die Aufgabe zugrunde, Vorrichtungen und Verfahren für Schienenfahrzeuge bereitzustellen, welche eine universelle und einfache Kopplung mit dem Schienenfahrzeug bei bestmöglicher Arbeitsweise einer befestigten Vorrichtung im Betrieb erlauben.

Diese Aufgabe wird durch die Merkmale der Ansprüche 1, 5 und 6 gelöst.

Eine Vorrichtung kann derart ausgestaltet werden, dass sie mit der Achse oder der Welle einer Fahrzeugachse eines Schienenfahrzeugs gekoppelt werden kann. Die Kopplung kann vorteilhaft durch Umschlingen der Welle erfolgen. Es wurde erkannt, dass die Anordnung an einer Welle eines Schienenfahrzeugs besondere Vorteile bietet. Unter anderem gehört die Welle von Schienenfahrzeugen zu den wenigen Bauteilen eines Schienenfahrzeugs, die nur geringe Abweichungen in ihrer Bauform zulässt. Typischerweise werden weltweit etwa nur zwei Durchmesser verwendet. Das bietet die Möglichkeit, Vorrichtungen, wie beispielsweise Sensoren, Auswerteeinheiten etc. besonders unkompliziert und einfach an Schienenfahrzeugen anzuordnen. Insbesondere wird eine Nachrüstung von Schienenfahrzeugen mit einer derartigen Vorrichtung, durch das Anordnen an der Welle des Schienenfahrzeugs besonders vereinfacht. Eine nachträgliche Sicherheitsprüfung kann entfallen. Für nahezu alle Mess- und Prüfverfahren, die an einem Schienenfahrzeug vorzunehmen sind, bietet die Anordnung entsprechender Sensoren und dazugehörender Elektronik an einer oder mehreren Wellen des Schienenfahrzeugs verblüffende Vorteile. Dies wird nachfolgend anhand der Beschreibung zahlreicher Aspekte der Erfindung deutlich.

Die Vorrichtung kann kraftschlüssig mit der Welle gekoppelt sein, sodass keine Verschiebung gegenüber der Welle im Betrieb des Schienenfahrzeugs auftritt. Insbesondere sollte die Vorrichtung so mit der Welle gekoppelt sein, dass sie bei einer Rotation der Welle mit der Rotationsbewegung der Welle mitgeführt wird.

Die Vorrichtung kann beispielsweise mittels eines (oder mehrerer) um die Welle geschlungenen Bandes an der Welle befestigt sein. Eine der Welle zugewandte Seite der Vorrichtung und/oder des Befestigungsbandes kann dabei Noppen aufweisen. Die der Welle zugewandte Seite kann auch nach Art eines Reifenprofils ausgestaltet sein. Hierdurch ergibt sich eine möglichst geringe Auflagefläche auf der Welle. Das Profil oder die Noppen können ausgestaltet sein, um das Ablaufen von Flüssigkeit von der Welle zu begünstigen. All dies kann Korrosion an der Welle verringern, die bei dieser Art der Befestigung einen kritischen Aspekt darstellen kann.

Die Vorrichtung kann vorteilhaft so mit der Welle gekoppelt werden, dass keine Kerbwirkung an der Welle auftritt. Die Vorrichtung kann derart mit der Welle gekoppelt werden, dass eine auf der Welle angebrachte Lackschicht nicht beschädigt wird. Diesbezüglich ist die Kraftwirkung mit der die Vorrichtung mit der Welle gekoppelt wird, so einzustellen, dass diese nicht zu groß wird. Die Vorrichtung oder die Befestigungsmittel (z.B. das Band) kann ein Material aufweisen, das weicher ist als eine Lackschicht auf der Welle. Die Vorrichtung oder das Befestigungsmittel (z.B. das Band) kann ein Material aufweisen, das weicher ist als ein Stahl der Welle.

Die Vorrichtung kann vorteilhaft derart auf der Welle angeordnet sein, dass sie nicht im Zentrum der Welle angeordnet ist. Eine leichte Verschiebung in axialer Richtung der Welle aus dem Zentrum der Welle heraus, bzw. aus dem Zentrum des Schienenfahrzeugs heraus, kann insbesondere aus mechanischen Gründen Vorteile bieten. Außerdem kann für verschiedene Ausgestaltungen so eine Sichtverbindung zum Transportbehälter bzw. dessen Unterseite erreicht werden. Ggf. kann auf diese Weise auch mehr Raum für die Rotation der Vorrichtung um die Welle bereitgestellt werden. Auch die Montage kann dadurch erleichtert werden.

Die Vorrichtung kann insbesondere eine Elektronik umfassen. Die Elektronik kann zur Erfassung von Fahrzeugdaten oder mit dem Fahrzeug im Zusammenhang stehenden Daten oder Informationen ausgestaltet sein. Obwohl die Anordnung an der Welle des Schienenfahrzeugs für die Erfassung zahlreicher Daten eigentlich problematisch erscheint, haben sich einige besonders vorteilhafte Anwendungsmöglichkeiten herausgestellt.

Die Erfindung stelle auch eine Vorrichtung und ein Verfahren zur Ortung oder Positionsbestimmung eines Schienenfahrzeugs bereit. So kann die Vorrichtung vorteilhaft ausgestaltet sein, um ein Funkortungsverfahren durchzuführen. Das Funkortungsverfahren kann auf der Verwendung von ortsfesten Funkreferenzstationen (Hot-Spots) basieren. Dabei kann die Vorrichtung auf der Welle des Schienenfahrzeugs ausgestaltet sein, um im Rahmen eines drahtlosen Funknetzwerkes zu arbeiten.

Gemäß einem weiteren Aspekt der Erfindung kann die Vorrichtung ausgestaltet sein, um das Funkortungsverfahren basierend auf einem Satellitennavigationsverfahren auszuführen. Das Funkortungsverfahren kann insbesondere auf dem Satellitennavigationssystem Galileo beruhen. Das Funkortungsverfahren kann auch ein Global Positioning System (GPS) verwenden. Hierzu kann insbesondere ein GPS-Empfänger auf der Welle eines Schienenfahrzeugs angeordnet sein.

Beim Anordnen eines GPS-Empfängers auf der Welle eines Schienenfahrzeugs sind insbesondere Reflexionen durch das Schienenfahrzeug und Abschattungen zu beachten. Es kann daher vorteilhaft sein, die Vorrichtung in axialer Richtung seitlich zum Rand des Schienenfahrzeugs auf der Welle zu verschieben.

Die Vorrichtung kann auch vorteilhaft einen Temperatursensor umfassen. Dieser Temperatursensor kann allgemein eingesetzt werden, um die Umgebungstemperatur zu detektieren. Die Temperaturmessung kann vorteilhaft auch dazu verwendet werden, ein Heißlaufen der Achslager des Schienenfahrzeugs festzustellen. Insbesondere kann die Temperatur mittels eines Infrarotsensors ermittelt werden. Ein entsprechender Infrarotsensor kann dann vorteilhaft ebenfalls in der Vorrichtung auf der Welle angeordnet sein. Die Anordnung eines (zweier) Temperatursensors(en), insbesondere eines Infrarotsensors innerhalb der Vorrichtung mit Blickrichtung auf die Radinnenseite kann vorteilhaft dazu verwendet werden, sogenannte Heißläufer zu detektieren, da sich das Lager genau auf der anderen Seite des Rades befindet. Auch hier erweist sich die Anordnung auf der Welle als besonders vorteilhaft.

In einer weiteren vorteilhaften Ausgestaltung, kann eine Vorrichtung, die vorteilhaft an der Welle eines Schienenfahrzeugs angeordnet ist, weiter ausgestaltet sein, um eine Positionsbestimmung des Schienenfahrzeugs nach einem Ortsfilterverfahren durchzuführen. Das Ortsfilterverfahren kann auf dem Vergleich zuvor georeferenziert aufgezeichneten lokalen Mustern von der Vorrichtung erfassbarer Messgrößen und/oder Signaturen beruhen. Insbesondere kann es auf der georeferenzierten Erfassung und Speicherung von Beschleunigungswerten (Stöße durch Schiene und das Überfahren von Weichen, Richtungsänderungen in Weichen, Richtungsänderungen durch Kurven, vertikale Richtungsänderungen bei Anstiegs- oder Gefällestrecken, wiederkehrende Weg-, Beschleunigungs-, Geschwindigkeitsprofile z.B. Verlangsamung bei der Durchfahrt durch Bahnhöfe, wiederkehrende Standzeiten sowie elektromagnetischer Wellen basieren. Hierzu kann die Vorrichtung vorteilhaft Funkempfänger und entsprechende Antennen aufweisen, mit denen elektromagnetische Wellen unterschiedlicher Frequenzbereiche empfangen werden können. Die so detektierten Muster von Beschleunigungswerten und elektromagnetischer Wellen können bestimmten Streckenabschnitten zugeordnet werden. Durch Vergleich mit früheren georeferenzierten Aufzeichnungen kann auf diese Art und Weise eine Lokalisierung bzw. Positionsbestimmung des Schienenfahrzeugs auch ohne Satellitennavigation erfolgen. Die Vorrichtung kann ausgestaltet sein, um elektromagnetische Wellen in einem Frequenzbereich unter 100 MHz zu empfangen und daraus lokale Muster zu bestimmten. Die Vorrichtung kann ausgestaltet sein, um elektromagnetische Wellen in einem Frequenzbereich unter 1 MHz zu empfangen und daraus lokale Muster zu bestimmten. Die Vorrichtung kann ausgestaltet sein, um elektromagnetische Wellen in einem Frequenzbereich über 100 MHz und unterhalb 900 MHz von zu empfangen und daraus lokale Muster zu bestimmten. Die Vorrichtung kann ausgestaltet sein, um elektromagnetische Wellen in einem Frequenzbereich über 2.4 GHz zu empfangen und daraus lokale Muster zu bestimmten. Der Positionsbestimmung kann vorteilhaft eine Kombination aus Satellitennavigationsverfahren und -vorrichtungen und Ortsfilterverfahren sein.

Das Ortsfilterverfahren kann auch auf der Detektion von Kurven basieren. Hierzu kommt insbesondere der Einsatz von Beschleunigungssensoren in Betracht. Vorteilhaft kann dann ein Beschleunigungssensor in der Vorrichtung auf der Welle angeordnet sein. Das Ortsfilterverfahren kann auch auf der Detektion von Beschleunigungswerten basieren. Insbesondere können bestimmte spezifische Muster oder Signaturen, die durch das Rollen der Räder auf bestimmten Streckenabschnitten erzeugt werden, zur Detektion der Position des Schienenfahrzeugs ausgewertet werden.

Das Ortsfilterverfahren kann auch auf akustischen Signalen beruhen. Insbesondere kann die Vorrichtung auf der Welle eines Schienenfahrzeugs dann auch einen akustischen Sensor, wie beispielsweise ein Mikrofon bzw. einen Körperschallsensor oder ähnliches aufweisen. Die akustischen Signale können dann beispielsweise dazu verwendet werden, eine Bremsaktivität des Schienenfahrzeugs zu detektieren. Darüber hinaus können Streckenabschnitte, Weichen, Kurven etc. mittels Beschleunigungswerten und/oder auf akustische Art und Weise ausgewertet werden. Hierdurch kann eine erfindungsgemäße Vorrichtung die Position bzw. die relative Position des Schienenfahrzeugs auf einem Streckenabschnitt bestimmen, oder entsprechende Daten weiterübertragen, die außerhalb des Schienenfahrzeugs zur Ermittlung der Position oder der Geschwindigkeit sowie weitere Fahrzeugbetriebsparameter herangezogen werden.

Die Vorrichtung kann gemäß einem vorteilhaften Aspekt der Erfindung auch ausgestaltet sein, um das Ortsfilterverfahren auf der Detektion von Bildern beruhend auszuführen. Hierzu kann die Vorrichtung einen Bild- oder Helligkeitssensor aufweisen. Dieser kann punktuelle, lineare oder flächige Bildinformationen, Helligkeit oder Farbgebung bzw. Farbdifferenzen oder Helligkeitsunterschiede detektieren. Diese Detektionssignale können dann ebenfalls zur Bestimmung der Position des Schienenfahrzeugs verwendet werden.

Für die Positionsbestimmung durch Ortsfilter kann vorteilhaft ein geringer Teil einer Güterwagenflotte mit Sensoren und präzisen Satellitennavigationsempfängern (z.B. GPS, Galileo, EGNOS, AGPS, DGPS) ausgestattet werden. Die ermittelten Messdaten werden mit der ermittelten Position und dem Zeitpunkt der Messung verknüpft und für die spätere Auswertung lokal gespeichert oder über eine Funkverbindung (z.B. GSM, Satelliten Kommunikation) an eine Datenbank übermittelt. Damit wird eine "Landkarte der ortsspezifischen Beschleunigungen, Funkwellen, usw." aufgebaut. Der verbleibende größere Teil der Güterwagenflotte kann dann nur mit den preisgünstigen Sensoren ausgestattet werden. Die präzisen, teuren Satellitennavigationsempfänger werden hierin nicht benötigt. Durch Vergleich der aufgenommenen Messdaten mit der in der Datenbank aufgezeichneten "Landkarte" wird die Position bestimmt. Der Vergleich kann im Sensor oder im Datenbanksystem erfolgen. Um den Vergleich im Sensor durchführen zu können, werden die relevanten Daten aus der Datenbank per Funkverbindung (GSM, Satelliten Kommunikation, lokale Funknetzwerke) zum Sensor übertragen. Besonders Vorteilhaft ist für die Übertragung dieser Daten jedoch ein "Digital Broadcast"-Verfahren (z.B. DAB) da von einer Zentrale (Datenbank) identische Daten ("Landkarte") an viele Sensoren übertragen werden (1:n-Beziehung).

Mit Hilfe des unten beschriebenen Laufleistungssensors kann präzise ab einer in der "Landkarte" ermittelten Position weitergerechnet werden (Koppelverfahren). Es hat sich gezeigt, dass mit diesem Verfahren eine gleisgenaue Ortung möglich ist. Dies ist insbesondere im Rangierbetrieb und bei Gleisbauarbeiten (Auslösung einer Rottenwarnung) wichtig.

Die geringe Zahl, der mit Satelliten Navigation ausgestatteten Güterwagenflotte ist ausreichend um die ständige automatische Aktualisierung der "Landkarte" sicherzustellen.

Die Bewegung kann vorteilhaft eine Rollbewegung der Räder des Schienenfahrzeugs sein. Daher können in vorteilhaften Ausgestaltungen insbesondere Sensoren in einer an einer Welle des Schienenfahrzeugs befestigten Vorrichtung vorgesehen sein, die geeignet sind, eine Rotation der Räder zu ermitteln. Wenn die Welle einer Fahrzeugachse, an der die Vorrichtung mit dem entsprechenden Sensor befestigt ist, sich im Einklang mit einer Rotation der Räder dreht, kann die Rotationsbewegung der Welle zur Detektion einer Rotation der Räder und damit einer relevanten Bewegung des Wagens bzw. Schienenfahrzeugs herangezogen werden. Insbesondere könnte dann ein Zeitgeber oder eine Echtzeituhr in der Vorrichtung vorgesehen sein, die den Zeitpunkt der Bewegungsaufnahme angibt. Die Bewegungsaufnahme könnte dann mit einem absoluten (Echtzeituhr) oder relativen (allgemeiner getakteter Zeitgeber) Zeitstempel versehen sein. In einem anderen Ausführungsbeispiel kann der Zeitpunkt auch aus einem drahtlosen Netzwerk, mittels eines Zeitbasierten Ortungssystems (GPS), oder einer externen Zeitreferenz (Zeitgeber oder Echtzeituhr) in einer Auswerteeinheit außerhalb der Vorrichtung an einer Welle bezogen werden. Dann würde die Vorrichtung an der Welle des Schienenfahrzeugs lediglich den Beginn der Bewegung signalisieren bzw. übermitteln. Vorteilhaft kann dann eine ID (Identifikationsnummer) der Welle und/oder des Wagens mit den Daten verknüpft werden. Eine ID der Welle kann beispielsweise in einem festen Speicher (ROM, EEPROM) in der Vorrichtung an der Welle vorgesehen sein. Die ID kann dann eine eindeutige Nummer sein, die jeweils nur ein einziges Mal vorkommt. Die Zuordnung der ID zu einer Welle kann dann einmalig und endgültig für die gesamte Lebensdauer der Welle erfolgen. Die Zuordnung der Wagen ID kann vorteilhaft bei der Ausrüstung des Wagens mit dem Radsatz und ihrer Welle beim Hersteller, bzw. nach einem Austausch im Servicewerk erfolgen. Die ID kann dann als Indikator für die Bewegungsaufnahme eines Wagens herangezogen werden. Dies ist dann relevant, wenn zahlreiche Wagen nacheinander anfahren. Dann können in kurzem Zeitraum hintereinander zahlreiche Meldungen auftreten, dass die Bewegung aufgenommen wurde. Die Unterscheidung nach Wellen und/oder Wagen, die die Bewegung gestartet haben, kann dann innerhalb einer oder mehrerer Auswertungseinheiten, an einer oder mehreren Wellen oder in einem Zugwagen (Lok) oder auch außerhalb des Zuges in einem tragbaren Gerät erfolgen.

Die Bewegungsdetektion kann vorteilhaft dadurch erfolgen, dass ein von einem Bewegungssensor gemeldetes Signal mit einem Schwellwert verglichen wird. Erst wenn das Bewegungssignal eine gewisse Kontinuität oberhalb eines Schwellwertes aufweist, wird ein Beginn des Anfahrens signalisiert bzw. festgestellt. Dies kann vorteilhaft sein, um kurzzeitige Stöße und Störungen auszuschließen.

Gemäß einem Aspekt der Erfindung kann die Vorrichtung einen Beschleunigungssensor umfassen. Der Beschleunigungssensor kann geeignet sein, eine statische Beschleunigung entlang mindestens einer ersten Achse (d.h. in einer Richtung entlang der Achse bspw. eines kartesischen Koordinatensystems) zu bestimmen. Der Beschleunigungssensor kann auf einem rotierenden Körper des Schienenfahrzeugs angeordnet sein, der in Reaktion auf eine Fahrbewegung des Fahrzeugs rotiert, so dass sich der Beschleunigungssensor bei einer Rotationsbewegung der Räder des Fahrzeugs (proportional zur Fahrgeschwindigkeit) derart bewegt, dass sich der der Erdbeschleunigung zuzuordnende Anteil der gemessenen statischen Beschleunigung aufgrund einer Winkeländerung der ersten Achse gegenüber dem Gravitationsfeld der Erde ändert. Der Beschleunigungssensor kann sich also im Gravitationsfeld der Erde befinden und eine Rotationsbewegung erfahren, wodurch sich die Lage der Achse in welcher er die statische Beschleunigung (bspw. die Erdbeschleunigung) bestimmt, ändern kann. Der Beschleunigungssensor kann ein Signal ausgeben, das die gemessene Beschleunigung repräsentiert.

Weitere Aspekte des Beschleunigungssensors werden weiter unten beschrieben. Diese lassen sich vorteilhaft mit der Bestimmung der Wagenreihung kombinieren. Ebenso sind alle anderen Aspekte der Erfindung, wie Ortung, Netzwerkbildung, Bremswirkungsbestimmung, Temperaturmessung, etc. vorteilhaft mit diesem und anderen Aspekten der Erfindung zu kombinieren. In besondere gilt für die Aspekte der Erfindung, dass diese von der Anordnung der Vorrichtung an einer Welle des Schienenfahrzeugs profitieren.

Die vorliegende Erfindung betrifft auch ein Verfahren zum Nachrüsten eines Schienenfahrzeugs mit einer Vorrichtung, die an einer Welle des Schienenfahrzeugs befestigt wird. Die Befestigung kann vorteilhaft mittels eines um die Welle geschlungenen Bandes erfolgen. Die vorliegende Erfindung hat daher zur Aufgabe, eine Vorrichtung und ein Verfahren zur Überwachung von Schienenfahrzeugen, insbesondere Güterwagen, bereitzustellen, welche für den Einsatz in Schienenfahrzeugen geeignet ist, und unter anderem die einfache Nachrüstung von Schienenfahrzeugen mit der Vorrichtung ermöglicht.

Gemäß einem weiteren Aspekt der vorliegenden Erfindung wird eine Vorrichtung zur Überwachung eines Schienenfahrzeugs mit Rädern bereitgestellt. Gemäß diesem Aspekt der Erfindung kann die Vorrichtung einen Beschleunigungssensor umfassen. Der Beschleunigungssensor kann geeignet sein, eine statische Beschleunigung entlang mindestens einer ersten Achse (d.h. in einer Richtung entlang der Achse bspw. eines kartesischen Koordinatensystems) zu bestimmen. Der Beschleunigungssensor kann auf einem rotierenden Körper des Schienenfahrzeugs angeordnet sein, der in Reaktion auf eine Fahrbewegung des Fahrzeugs rotiert, so dass sich der Beschleunigungssensor bei einer Rotationsbewegung der Räder des Fahrzeugs (proportional zur Fahrgeschwindigkeit) derart bewegt, dass sich der der Erdbeschleunigung zuzuordnende Anteil der gemessenen statischen Beschleunigung aufgrund einer Winkeländerung der ersten Achse gegenüber dem Gravitationsfeld der Erde ändert. Der Beschleunigungssensor kann sich also im Gravitationsfeld der Erde befinden und eine Rotationsbewegung erfahren, wodurch sich die Lage der Achse in welcher er die statische Beschleunigung (bspw. die Erdbeschleunigung) bestimmt, ändern kann. Der Beschleunigungssensor kann ein Signal ausgeben, das die gemessene Beschleunigung repräsentiert. Die Vorrichtung kann eine Auswerteeinheit umfassen, die eingerichtet ist, um das Ausgangssignal des Beschleunigungssensors zu empfangen, das die gemessene Beschleunigung angibt, und basierend auf diesem Ausgangssignal eine Laufleistung und/oder eine Fahrgeschwindigkeit des Schienenfahrzeugs zu bestimmen. Die Auswerteeinheit kann eingerichtet sein, um aus dem Verlauf der Beschleunigungswerte über die Zeit mindestens die Laufleistung bzw. die Fahrgeschwindigkeit zu bestimmen. Die Auswerteeinheit kann außerdem eingerichtet sein, um mindestens ein Fehlersignal aus einem Signal des Beschleunigungssensors detektieren. Wie später noch ausgeführt können vorteilhaft mehrere Beschleunigungssensoren in einem festen Winkel zueinander an der Welle des Schienenfahrzeugs angeordnet sein.

Der rotierende Körper könnte zwar ein oder mehrere Räder des Schienenfahrzeugs selbst sein. Vorteilhaft ist der rotierende Körper jedoch nur mit den Rädern gekoppelt und bewegt sich im Einklang mit der Rotationsbewegung der Räder, was sich in einer Veränderung des Ausgangssignals des Beschleunigungssensors widerspiegelt, die der Bewegung des Fahrzeugs entspricht. Aus dem Sensorsignal (Änderung der statischen Beschleunigung) lässt sich beispielsweise die Laufleistung des Fahrzeugs berechnen, wenn der Radumfang eines Rades und die Beziehung zwischen der Drehung des Rades und der Rotation des Beschleunigungssensors bekannt sind. Der Radumfang oder Durchmesser des Rades ist daher vorteilhaft in der Auswerteeinheit gespeichert. Weiterhin kann die Auswerteeinheit eingerichtet sein, um aus dem Sensorsignal eine momentane Geschwindigkeit oder Beschleunigung des Schienenfahrzeugs zu bestimmen.

Der Beschleunigungssensor kann derart beispielsweise an oder auf einer Welle einer Fahrzeugachse, die mit den Rädern gekoppelt ist, angeordnet werden, dass der Beschleunigungssensor sich bei normaler Vorwärts- oder Rückwärtsfahrt des Fahrzeugs bei einer Drehbewegung des Rades um einen zentralen Punkt der Welle bewegt (bspw. mit der gleichen Drehgeschwindigkeit wie die Räder an der Welle). Das daraus entstehende Ausgangssignal des Beschleunigungssensors wird der Auswerteeinheit zugeführt, die geeignet ist, die Laufleistung des Schienenfahrzeugs, basierend auf dem Ausgangssignal, zu bestimmen. Bei einer kontinuierlichen Bewegung des Schienenfahrzeugs in eine Richtung wird sich der Beschleunigungssensor um die Welle einer Fahrzeugachse des Schienenfahrzeugs, bewegen und der Winkel der Achse, in welcher der Beschleunigungssensor die statische Beschleunigung misst, ändert sich gegenüber dem (bzw. im) Erdgravitationsfeld (bezüglich der Feldlinien des Erdgravitationsfeldes). Das gilt immer, wenn der Beschleunigungssensor also solches im Gravitationsfeld der Erde, oder ganz allgemein in einem statischen Gravitationsfeld eines Planeten rotiert, soweit die Achse, in welcher der Beschleunigungssensor die Beschleunigung bestimmen kann, eine Winkeländerung gegenüber dem Gravitationsfeld derart erfährt, dass sich eine Änderung der gemessenen Beschleunigung ergibt. Gleichzeitig ermöglichen diese Aspekte der Erfindung mit demselben Beschleunigungssensor auch unplanmäßige Beschleunigungswerte zu ermitteln und diese bestimmten Fehlergruppen zuzuordnen.

Die Auswerteeinheit kann ausgestaltet werden, um die Laufleistung der einer kompletten Fahrzeug- oder bspw. Güterwagenachse bestehend aus Welle und Rädern (also nicht unmittelbar des Schienenfahrzeugs sondern einer einzelnen Fahrzeugachse) zu bestimmen. Das ist besonders dann von großer Bedeutung, wenn die Fahrzeugachsen des Schienenfahrzeugs ausgewechselt werden. Dadurch kann eine einzelne Fahrzeugachse eine andere Laufleistung als eine andere Fahrzeugachse des gleichen Schienenfahrzeugs haben. Im Kontext der vorliegenden Erfindung bezeichnet "Welle" die Welle einer Fahrzeugachse, die zwei Räder verbindet. Die Auswerteeinheit ist entsprechend dieses Aspekts der Erfindung gemeinsam mit dem Beschleunigungssensor, beispielsweise in einer einteiligen (in einem Gehäuse) kompakten Vorrichtung, an der Fahrzeugsachse befestigt.

Die Auswerteeinheit bestimmt die Laufleistung der Fahrzeugachse, an welcher der Sensor (bzw. die Vorrichtung) befestigt ist. Außerdem kann die Auswerteeinheit eingerichtet sein, um aus dem Inkrement (relative Zunahme) der gelaufenen Leistung einer von mehreren bzw. mehrerer Fahrzeugachsen die Laufleistung des Schienenfahrzeugs, also die zurückgelegte Strecke des Schienenfahrzeugs zu bestimmen. Während die Auswertung der Beschleunigungssignale, die sich auf eine Fahrzeugachse beziehen, unmittelbar in der Auswerteeinheit an der Fahrzeugachse stattfinden können, können die bereits vor-ausgewerteten Signale mehrerer Fahrzeugsachsen in einer zentralen Einheit (später als Telematikeinheit genauer beschrieben) des Schienenfahrzeugs in Beziehung gesetzt und mit weiteren Parametern bzw. Signalen abgeglichen werden.

Erfindungsgemäß wurde unter anderem erkannt, dass sich aus dem Ausgangssignal des Beschleunigungssensors, in dem sich die vom Beschleunigungssensor gemessene Beschleunigung widerspiegelt, vorteilhaft die Laufleistung und/oder Fahrgeschwindigkeit mittels einer elektronischen Auswertung bestimmen lässt und gleichzeitig die wichtigsten Fehlersignale ermittelt werden können. Bei kontinuierlicher Vorwärts- oder Rückwärtsbewegung des Fahrzeugs ist das Ausgangssignal ein periodisches Signal, im Idealfall ein Sinussignal. Bei bekanntem Radumfang kann durch die Auswerteeinheit vorteilhaft bspw. aus der Periode oder Frequenz des Sinussignals (oder auch dem Abstand der Maxima oder Nullstellen des Sinussignals) die zurückgelegte Wegstrecke des Schienenfahrzeugs bestimmt werden.

Vorteilhaft ist die Bestimmung der Laufleistung bzw. Fahrgeschwindigkeit aus den Maxima/Minima (Extremwerte) des Ausgangssignals des Beschleunigungssensors möglich. Das liegt daran, dass je nach Lage der Achse oder der Achsen, in welcher der Beschleunigungssensor die statische Beschleunigung misst, ein Offset (der gemessenen Beschleunigungswerte) auftreten kann, welcher das Ausgangssignal (gemessene Beschleunigung) gegenüber der Nulllinie verschiebt. Nullstellen sind daher häufig schlechter geeignet als die Maxima oder die Minima des Ausgangssignals. Eine automatische Auswertung des Ausgangssignals des Beschleunigungssensors, bspw. in einem Mikrocontroller, kann also vorteilhaft eingerichtet sein, um die Laufleistung basierend auf den Maxima oder Minima des Ausgangssignals zu bestimmen und einen entsprechenden Ausgangswert bereitzustellen, der die Laufleistung wiedergibt.

Der Beschleunigungssensor kann vorteilhaft so angeordnet sein, dass mindestens eine Achse, in welcher der Beschleunigungssensor eine statische Beschleunigung bestimmen kann, so ausgerichtet ist, dass sich bei einer Blockade der Räder keine Winkeländerung der Achse gegenüber dem Gravitationsfeld ergibt. Dies kann dann vorteilhaft bei der Ausgestaltung einer Auswerteeinheit berücksichtigt werden. Diese kann so ausgestaltet sein, dass sie eine Blockade der Räder des Schienenfahrzeugs basierend auf diesem Ausgangssignal (oder auch mehreren solchen Ausgangssignalen) des Beschleunigungssensors bestimmt. Dabei können bspw. Fehlbedienungen oder Fehlfunktionen der Bremsen von Schienenfahrzeugen detektiert werden, die Schäden und Verschleiß nach sich ziehen. Oft werden Bremsen beim Rangieren gar nicht oder nicht ordnungsgemäß gelöst bzw. die Bremskraft wird bezüglich des Ladezustands nicht richtig eingestellt. Eine erfindungsgemäße Vorrichtung kann eingerichtet sein, diese Fehler zu detektieren. Insbesondere kann die Auswerteeinheit eine Echtzeituhr enthalten, und das Auftreten (Beginn) einer Blockade der Räder mit einer Zeitmarke versehen und ggf. die Dauer des Fehlverhaltens bestimmen.

Vorteilhaft kann der Beschleunigungssensor an einem Außenumfang einer mit dem Rad gekoppelten Welle (z.B. eine Achse, welche zwei Räder des Schienenfahrzeugs verbindet) angeordnet sein. Grundsätzlich kann der Beschleunigungssensor auch vorteilhaft am Rad oder in bzw. an der Nabe angeordnet sein. Erfindungsgemäß wurde die Anordnung an einer Welle einer Fahrzeugachse jedoch aus den vorgenannten Gründen als besonders vorteilhaft erkannt. Dabei kann der Sensor bzw. die Anordnung, in der der Sensor untergebracht ist, als Ganzes im Wesentlichen um die Welle und dabei um die eigene Achse rotieren. Auch mit einer Anordnung an Rad oder Nabe lassen sich erfindungsgemäße Vorteile erzielen.

Der Beschleunigungssensor kann vorteilhaft so angeordnet sein, dass eine erste Achse, in welcher der Beschleunigungssensor die statische Beschleunigung bestimmen kann, am Außenumfang der Querschnittfläche des rotierenden Teils, an dem er angebracht ist, (z.B. die Welle einer Fahrzeugsachse) in tangentiale Richtung weist. Beschleunigungssensoren weisen typischerweise ein, zwei oder drei senkrecht zueinander stehende axiale Richtungen (auch als Achsen oder Dimensionen bezeichnet) auf, in denen sie die Beschleunigungen bestimmen können. Zu jeder dieser axialen Richtungen (Achsen, Dimensionen) kann vom Beschleunigungssensor ein Ausgangssignal bereitgestellt werden. Da die Sensoren in jeder dieser Richtungen auch eine statische Beschleunigung (bspw. Erdbeschleunigung) bestimmen können, liefert das Ausgangssignal des Bewegungssensors typischerweise eine Information über die Veränderung des Beschleunigungswertes in einer, zwei oder allen drei Richtungen. Zeigt eine der Achsen des Beschleunigungssensors in tangentiale Richtung, also der Drehrichtung der Welle einer Fahrzeugachse, so ergibt sich bei konstanter Drehgeschwindigkeit ein sinusförmiges Ausgangssignal. Daneben liefert das Ausgangssignal auch eine Information über den Drehwinkel bzw. die Stellung des Rades bei langsamen Bewegungen oder auch im Stillstand.

Ein günstiger Abstand des Bewegungssensors zur Mitte der Welle einer Fahrzeugachse beträgt bspw. etwa 100 mm. Vorteilhaft kann sich der Beschleunigungssensor bei Rotation der Welle dann auf einer Kreisbahn mit einem Durchmesser von ca. 200 mm bewegen. Ein typischer Durchmesser D eines rotierenden Körpers (bspw. Welle einer Fahrzeugachse), auf dem der Beschleunigungssensor angeordnet ist, kann D= 173 oder 160 mm sein. Es konnte festgestellt werden, dass bei etwa diesem Abstand bei typischen Bewegungssensoren ein Signal hervorgerufen wird, dessen Eigenschaften eine Auswertung bezüglich Laufleistung, Drehbewegung und bestimmter Fehlerbedingungen begünstigen. Je näher der Sensor am Zentrum (bezogen auf den Querschnitt) der Welle oder des rotierenden Körpers angeordnet ist, desto weniger wird das Signal unter Umständen von Störgrößen hinsichtlich bestimmter Auswertesignale überlagert. Allerdings ist das Zentrum in der Regel schwer bzw. gar nicht zugänglich. Eine Anordnung in der Nabe eines Rades kann, soweit diese zugänglich ist, also auch vorteilhaft sein, eignet sich aber kaum zur Nachrüstung.

Vorteilhaft kann der Beschleunigungssensor auch so angeordnet sein, dass eine zweite axiale Richtung, in welcher der Beschleunigungssensor die Beschleunigung bestimmt, bezüglich der Querschnittfläche der Welle (bzw. des rotierenden Körpers) vom Zentrum der Welle in radiale Richtung weist. Wird ein Sensor mit zwei axialen Richtungen verwendet und gemäß diesem Aspekt der Erfindung angeordnet, so kann die Beschleunigung in radiale und auch in tangentiale Richtung bestimmt werden. Hieraus lässt sich vorteilhaft die Drehrichtung des Rades bestimmen, weil sich die der jeweiligen Achse zugeordneten Ausgangssignale in einer spezifischen Phasenlage zueinander befinden, je nach dem, in welche Richtung sich das Rad bzw. die Räder des Fahrzeugs drehen. Eine Auswerteeinheit gemäß diesem Aspekt der vorliegenden Erfindung ist dann vorteilhaft so ausgestaltet, dass sie die Phasenlage der Ausgangssignale bestimmt und hieraus eine Information über die Drehrichtung des Rades ableitet.

Schließlich kann der Beschleunigungssensor vorteilhaft so angeordnet sein, dass noch eine dritte axiale Richtung, in welcher der Beschleunigungssensor die Beschleunigung bestimmen kann, quer zur Fahrtrichtung, zum Beispiel in axiale Richtung der Welle weist. Hierdurch lässt sich beispielsweise noch die Neigung des Fahrzeugs bzw. der Welle oder der Fahrzeugachse bestimmen. Dadurch lässt sich beispielsweise auf Kurvenfahrten oder spezifische äußere Fehlerzustände schließen, die ebenfalls automatisch erkannt und bspw. mit dem Zeitpunkt ihres Auftretens (Zeitstempel) abgespeichert und/oder übertragen werden können.

Der Beschleunigungssensor kann also als 1-dimensionaler, 2-dimensionaler oder 3-dimensonaler Sensor ausgeführt sein, bei dem die axialen Richtungen, in denen die Beschleunigung bestimmt wird, jeweils paarweise senkrecht zueinander stehen. Auch können mehrere 1-, 2- oder 3-dimensionale Sensoren an unterschiedlichen Orten des Achsumfangs verwendet werden, was die Auswertung erleichtert, da z.B. der durch Fliehkraft entstehende Offset als Störgröße vermieden werden kann.

Eine Vorrichtung gemäß der vorliegenden Erfindung kann vorteilhaft einen Beschleunigungssensor, eine Analog-Digital-Wandler, eine Batterie zur Stromversorgung, einen Mikroprozessor zur Vorauswertung oder auch zur umfassenden Auswertung (gemäß vorgenannter Aspekte) der Ausgangssignale des Sensors, und einen Speicher zur Speicherung von Informationen des Ausgangssignals des Beschleunigungssensors aufweisen. Außerdem kann ein Funkmodul zur Übertragung der mindestens vorverarbeiteten (z.B. digitalisiert und bezüglich eines Fehlermusters geprüft) oder gespeicherten Daten vorgesehen sein. Der/die Beschleunigungssensor(en), der Speicher, das Funkmodul und/oder der Mikroprozessor, sowie weitere Komponenten können vorteilhaft in einem gemeinsamen robusten Gehäuse untergebracht sein. Dieses Gehäuse (Vorrichtung) wird vorteilhaft an der Fahrzeugsachse (Welle) befestigt. Zur Vermeidung von Unwucht ist idealerweise ein Gegengewicht, beispielsweise auf der gegenüberliegenden Seite der Welle einer Fahrzeugachse, vorzusehen.

Die Auswertung kann zunächst eingerichtet sein, um die Bestimmung der Laufleistung, also des Kilometerstandes bzw. der gefahrenen Kilometer bzw. der zurückgelegten Wegstrecke des Fahrzeuges bereitzustellen. Neben der Ermittlung der Laufleistung oder Neigung der Räder bzw. der Fahrzeugachse kann sie auch Schäden am rotierenden Objekt (z.B. Lager oder Lauffläche, insbesondere Flachstellen) basierend auf der Detektion von Abweichungen vom Sinusverlauf bestimmen. Wenn sich Abweichungen von der Sinusform periodisch mit der Frequenz der Achse bei gleicher Achswinkelstellung wiederholen, weist dies auf Störungen bspw. an den Rädern oder im Lager hin. Die Auswerteeinheit kann dann so eingerichtet sein, dass sie diese Art von Fehlern (bestimmte Fehlermuster) automatisch erkennt und unterscheidet. Die Speicherung und/oder Übertragung kann dann in Form eines Fehlercodes u.U. mit einem Zeitstempel erfolgen.

In ähnlicher Weise können mittels einer erfindungsgemäß eingerichteten Auswerteeinheit, die Sensorsignale vom Beschleunigungssensor am Schienenfahrzeug empfängt, Schäden am Untergrund (z.B. der Schiene) mittels der Detektion singulär auftretender Beschleunigungswerte in vertikaler Richtung ermittelt werden. Die Speicherung und/oder Übertragung kann dann in Form eines Fehlercodes u.U. mit einem Zeitstempel erfolgen.

Schließlich sind Stöße in Querrichtung (z.B. beim Beladen) oder Stöße in Längsrichtung (z.B. durch Rangierstöße) durch Auswertung von Veränderungen der Beschleunigung in horizontaler Richtung möglich. Die Auswerteeinheit kann eingerichtet werden, diese zu detektieren und einem Fehlertyp zuzuordnen. Die Speicherung und/oder Übertragung kann dann in Form eines Fehlercodes u.U. mit einem Zeitstempel erfolgen.

Um horizontale und vertikale Stöße zu detektieren, werden die Beschleunigungswerte des Beschleunigungssensors entlang der ersten und die Beschleunigungswerte entlang der zweiten axialen Richtung (radial und tangential zum rotierenden Körper bzw. der Welle) benötigt. Aufgrund der Vorkenntnis über die Anordnung des Sensors auf dem rotierenden Körper kann aus der vektoriellen Resultierenden der Beschleunigungen auf die Richtung der Stöße geschlossen werden. D.h. es kann aus den Sensorsignalen bestimmt werden, in welche Richtung (bspw. vertikal oder horizontal) ein Stoß erfolgt ist. Vorteilhaft sollten Stöße in horizontaler Richtung detektiert werden, die gleich oder größer als 2,4 g (g=Erdbeschleunigung) sind, weil festgestellt werden konnte, dass Stöße ab dieser Stärke ein erhöhtes Schadensrisiko nach sich ziehen bzw. auf irreguläre Handhabung des Schienenfahrzeugs hinweisen. Auch derartige Signale können mit einem spezifischen Fehlercode und ggf. Zeitstempeln abgespeichert und/oder übertragen werden.

Auch ein Verlust des Rad-Schiene-Kontakts (z.B. durch Entgleisung) kann detektiert werden, beispielsweise dann, wenn eine kontinuierliche Überlagerung des Sinussignals mit Störgrößen in allen Achsen teilweise mit periodisch wiederkehrender Signatur in vertikaler Richtung mit konstantem zeitlichem Abstand (Schwellenfachfrequenz) detektiert wird.

Durch Registrierung nicht periodischer Beschleunigungswerte (Erschütterung), ohne dass währenddessen ein periodisches Signal (d.h. die Achse dreht sich nicht) gemessen wird, kann eine Blockade der Räder festgestellt werden. Die Detektion dieses Fehlers stellt erhöhte Anforderungen an die Elektronik, weil dieser Fehler aus dem Stillstand auftreten kann. Die Auswerteeinheit sollte daher vorteilhaft so ausgestaltet sein, dass sie in der Lage ist, eine Fortbewegung des Schienenfahrzeugs mit und ohne Rotation der Räder oder der Welle festzustellen. Hierfür kann die Vorrichtung an der Fahrzeugachse einen zusätzlichen Vibrationssensor aufweisen, der den Beginn einer Fahrzeugbewegung anhand einer erhöhten Fahrzeugvibration ermittelt und erst daraufhin der Beschleunigungssensor aktiviert wird. Dies kann den Energieverbrauch erheblich reduzieren. Dies kann auch vorteilhaft zur Bestimmung der Wagenreihung verwendet werden.

Vorteilhaft kann die Auswerteeinheit auch eingerichtet sein, um die Drehzahl der Achse durch Auswertung des durch die Fliehkraft in der zweiten axialen Richtung (radiale Richtung) hervorgerufenen Gleichanteils zu bestimmen oder zusätzlich zu verifizieren. Diese Größe kann zur Kontrolle oder Plausibilitätsprüfung anderer Sensorsignale herangezogen werden. Der Fliehkraft bedingte Gleichanteil kann durch die Verwendung von zwei tangentialen vorteilhaft im Winkel von 90° an der Welle angebrachten Beschleunigungssensoren vermieden werden.

Gemäß einem vorteilhaften Aspekt der Erfindung wird auch ein Verfahren zur Überwachung eines Schienenfahrzeugs bereitgestellt. Dabei wird eine statische Beschleunigung entlang mindestens einer ersten Achse gemessen, wobei die Achse im Gravitationsfeld der Erde gemäß einer Rotationsbewegung der Räder des Fahrzeugs rotiert, so dass sich der Anteil der gemessenen statischen Beschleunigung aufgrund einer Winkeländerung der ersten Achse gegenüber dem Gravitationsfeld der Erde ändert. Aus den gemessenen Beschleunigungswerten in einer, zwei oder drei axialen Richtungen (wie zuvor erläutert) wird dann die Fahrgeschwindigkeit oder Laufleistung oder beides berechnet. Zusätzlich kann die Drehzahl der Rotationsbewegung also bspw. eines rotierenden Körpers (bspw. der Räder, Welle, einer Nabe etc.), Laufleistung, Geschwindigkeit (Frequenz des Sinussignals), Laufrichtung (aus der Phasenlage zweier Sinussignale) und zahlreiche verschiedene andere Signale und mindestens eine Störung bzw. ein Fehlerzustand des Schienenfahrzeugs aus den Beschleunigungssignalen ermittelt werden.

Ein vorteilhafter Aspekt der vorliegenden Erfindung besteht auch darin, dass Schienenfahrzeuge ohne besonderen Eingriff und auf einfache kostengünstige Art und Weise mit der erfindungsgemäßen Vorrichtung nachgerüstet bzw. ausgerüstet werden können. Daher stellt die vorliegende Erfindung auch ein Verfahren zum Nachrüsten von Schienenfahrzeugen mit Rädern bereit, bei dem die Schienenfahrzeuge mit einer Vorrichtung zur Überwachung des Schienenfahrzeugs ausgestattet werden. Dabei können Vorrichtungen gemäß einem oder mehreren Aspekten der Erfindung, wie vorstehend erläutert, verwendet werden. Es kann vorteilhaft sein, eine oder jede Welle eines Schienenfahrzeugs, eines Wagens des Schienenfahrzeugs oder aller Wagen einschließlich Zugwagen (einer oder mehrerer) mit einer oder mehreren Vorrichtungen in erfindungsgemäßer Weise zu koppeln.

Dabei kann ein Beschleunigungssensor, der eine statische Beschleunigung entlang mindestens einer Achse bestimmen kann, auf einem rotierenden Körper (bspw. vorteilhaft an einer Welle, die zwei Räder verbindet) des Schienenfahrzeugs angeordnet werden, so dass sich der Beschleunigungssensor bei einer Rotationsbewegung der Räder des Fahrzeugs derart bewegt (vorteilhaft proportional zur Fahrgeschwindigkeit), dass sich der Anteil der vom Beschleunigungssensor gemessenen Erdbeschleunigung aufgrund einer Winkeländerung der Achse gegenüber dem Gravitationsfeld der Erde ändert. Außerdem ist eine Auswerteeinheit direkt beim Beschleunigungssensor, also auch auf dem rotierenden Körper (bspw. Welle), irgendwo am Schienenfahrzeug selbst oder außerhalb des Schienenfahrzeugs vorzusehen. Die Auswertung beinhaltet die Detektion mindestens eines Fehlers oder einer Störung des Fahrbetriebes des Schienenfahrzeugs, wie bspw. eine Blockade der Räder. Vorteilhaft erfolgt die Übertragung der bereits zumindest teilweise ausgewerteten Ausgangssignale des Beschleunigungssensors drahtlos bspw. in Form eines km-Standes und/oder eines Fehlercodes. Durch die erfindungsgemäße Anordnung an einer Welle wird jeder größere Eingriff in das Schienenfahrzeug vermieden, wie er bei zweiteiligen Geber-Sensor-Systemen erforderlich ist. Zudem wird die bei zweiteiligen Systemen unvermeidliche Fehlerquelle einer mangelhaften Justage von Geber und Sensor vermieden. Alle wichtigen Fahrzeugwerte (Laufleistung, Geschwindigkeit, Fehler, Fahrgestelldiagnose) lassen sich mittels eines kompakten Sensors (Vorrichtung) bspw. an der Welle des Schienenfahrzeugs ermitteln.

In einer vorteilhaften Ausgestaltung wird die Vorrichtung an der Welle bzw. der Welle einer Fahrzeugachse oder auch Güterwagenachse mit einem umlaufenden Stahlband befestigt, was den Nachrüstungsaufwand weiter reduziert. Dabei können vorteilhaft Materialien zum Einsatz kommen, welche die Korrosion zwischen Stahlband und Welle gering halten. Insbesondere kann auch eine Schicht eines Kunststoffmaterials oder Polymers zwischen die Welle und das Stahlband eingezogen werden. Es hat sich gezeigt, dass die Vorrichtung, in der unterschiedlichste Elektronik, Ortsfilter, Brems- und/oder Temperatursensoren, Infrarot- und/oder Abstandsensoren, Bewegungssensor, Vibrationssensor, Beschleunigungssensor und/oder die Auswerteelektronik angeordnet sind, auf der Welle der Fahrzeugachse angeordnet sein sollte. Die Vorrichtung kann vorteilhaft derart ausgestaltet sein, dass möglichst geringe Torsionskräfte auf die Vorrichtung (z.B. Vorrichtung) erzeugt werden. Deshalb kann die Erstreckung der Vorrichtung (Vorrichtung) in Richtung der Welle (entlang der zentralen Achse der Welle) möglichst gering sein. Eine Anordnung der Vorrichtung (Vorrichtung) etwa in der Mitte der Welle der Fahrzeugachse ist ebenfalls vorteilhaft. Das Verhältnis von Höhe H zu Breite B der Vorrichtung (Gehäuseabmessungen) sollte H:B= 1:2 nicht unterschreiten; die Vorrichtung sollte in radialer Richtung also maximal nur halb so weit von der Welle abstehen, wie sie sich in axialer Richtung der Welle erstreckt. Das begünstigt die Befestigung mit einem umlaufenden Stahlband (oder auch zwei parallelen Stahlbändern). Bezogen auf einen Durchmesser D der Welle des Schienenfahrzeuges können Höhe H und Breite B der Vorrichtung etwa in folgendem Verhältnis stehen: D:H:B = 4:1:2. Berücksichtigt man noch die breite des Stahlbandes S, so ergibt sich folgendes ungefähres vorteilhaftes Verhältnis: D:H:B:S = 6:1.5:3.3:1. Von diesem Verhältnis sollte vorteilhaft nicht um mehr als 50% abgewichen werden. Es hat sich gezeigt, dass die Widerstandsfähigkeit gegen Torsionskräfte dadurch erhöht wird.

Neben dem Beschleunigungssensor können in der Vorrichtung an der Welle (bspw. Welle einer Fahrzeugachse bzw. Güterwagenachse) eine Batterie, ein Mikroprozessor, ein Datenspeicher und ein Funkmodul angeordnet sein. Die Ausgangssignale des Beschleunigungssensors können dann entsprechend vorstehender Beschreibung ausgewertet werden. Vorteilhaft besteht die Sensorik nur aus einem kompakten Teil, das am rotierenden Körper angebracht wird. Dieses Teil kann fest mit dem rotierenden Körper, bspw. einer Fahrzeugachse (bzw. Welle der Fahrzeugachse) des Fahrzeugs, verbunden sein und muss bei Instandsetzungsarbeiten nicht von der Fahrzeugachse bzw. Welle der Fahrzeugachse getrennt werden. Es kann dann einteilig, kompakt und leicht zu montieren sein, um den Wartungs- bzw. Nachrüstaufwand gering zu halten. Da im Sensor keine beweglichen Komponenten vorhanden sind, ist die erfindungsgemäße Vorrichtung praktisch verschleißfrei und erfordert keine Eingriffe in das Fahrgestell. Somit kann eine erfindungsgemäße Vorrichtung, die am rotierenden Teil befestigt wird, beispielsweise vorteilhaft aus einem ein- bis dreiachsigen (bspw. mikromechanischen oder piezoelektrischen) Beschleunigungssensor, einer Batterie zur Energieversorgung, einem Mikroprozessor zur Datenverarbeitung und Auswertung, einer Echtzeituhr, einem Speicher zur Zwischenspeicherung der Daten, einem Funkmodul zur Übertragung der Daten an ein geeignetes Lesegerät bzw. weiteres Auswertegerät, und einem Gehäuse bestehen.

Außerdem kann vorteilhaft ein Gegengewicht zur Vermeidung von Unwucht vorgesehen werden. Dieses kann in ähnlicher Weise wie die Vorrichtung mit dem Stahlband an der Fahrzeugachse bzw. Welle zu befestigen sein. Es kann auch vorteilhaft sein, eine Batterie als Gegengewicht zu verwenden. Diese Komponenten können in einem Gehäuse gegen äußere Einflüsse geschützt und an die zu überwachende Fahrzeugachse (bzw. Welle) montiert werden. Dazu sind keinerlei Veränderungen am zu überwachenden System notwendig. Zur Vermeidung von Unwucht kann das Gegengewicht bei der Sensormontage auf der dem Sensor gegenüberliegenden Seite der Fahrzeugachse bzw. Welle der Fahrzeugachse montiert werden.

Nach Inbetriebnahme kann die erfindungsgemäße Vorrichtung die Veränderung der Gravitation in Abhängigkeit vom Drehwinkel des rotierenden Körpers (bspw. eine Achse oder Welle, die zwei Räder verbindet) messen und die Daten auswerten, um daraus die Laufleistung und ggf. mindestens einen Fehler (ggf. nebst zugehörigem Fehlercode) zu bestimmen. Die daraus abgeleiteten Informationen werden beispielsweise im Modul abgespeichert und auf Abruf oder zu voreingestellten Zeitpunkten beispielsweise per Funk an ein geeignetes Auswertegerät übertragen, um dort die Fahrgeschwindigkeit oder Laufleistung zu bestimmen. Im Unterschied zu herkömmlichen Lösungen, die auf zwei Komponenten basieren (Geber und Sensor), ist der Bezugspunkt des erfindungsgemäßen Systems die Erde bzw. das Gravitationsfeld der Erde.

Gemäß einem weiteren Aspekt der Erfindung kann eine Vorrichtung, die wie zuvor beschrieben ausgestaltet ist, an einer oder vorteilhaft an jeder Fahrzeugachse eines Schienenfahrzeugs befestigt sein.

In einer vorteilhaften Ausgestaltung der Erfindung kann eine Telematikeinheit am Schienenfahrzeug vorgesehen sein, welche drahtlos Daten von der oder den Vorrichtungen (bspw. eine an jeder Fahrzeugachse) empfängt. Diese Daten können die Geschwindigkeit, die Laufleistung, die Drehzahl der Fahrzeugachse bzw. Welle der Fahrzeugachse sein. Vorteilhaft werden gerade nicht die Beschleunigungswerte (d.h. die bspw. analogen Sensorsignale) selbst übertragen, sondern Werte die auf einer Vorverarbeitung der Daten basieren. Dabei kommen vorteilhaft in Betracht: die Drehzahl der Fahrzeugachse, die Laufleistung (km-Stand), die Geschwindigkeit, die Drehrichtung der Fahrzeugachse und spezifische Fehlercodes, die sich auf Fehler, wie bspw. Die Blockade der Räder bzw. Fahrzeugachse, Stöße in horizontaler oder vertikaler Richtung und Entgleisung beziehen können. Es kann außerdem zu jedem Fehler der Zeitpunkt und ggf. die Dauer des Fehlers übertragen werden. Die Telematikeinheit kann eingerichtet sein, um die Daten mittels Mobilfunktechnik (GSM, UMTS etc.) weiterzuleiten. Sie kann auch eine GPS (Global Positioning System) Einheit zur Bestimmung der Position enthalten. Die Telematikeinheit kann sehr vorteilhaft einen Vibrationssensor enthalten, um feststellen zu können, wann sich das Fahrzeug in Bewegung setzt. Das ermöglicht, Energie einzusparen. Neben Mobilfunk kommt auch eine Kommunikation via Satellit in Betracht, da Schienenfahrzeuge, insbesondere Güterwaggons, in Gebieten ohne die erforderliche Infrastruktur bzw. Netzabdeckung unterwegs sein können.

Es werden nicht nur Daten, die sich auf die Drehbewegung der Welle beziehen, sondern auch Fehlerinformationen ermittelt und übertragen. Dabei kommen vor allem Blockaden der Räder, sowie vertikale oder horizontale Stöße in Betracht. Als Fehlermeldungen kann die Auswerteeinheit in der Vorrichtung zum Beispiel Lagerschäden, Entgleisungen oder Blockaden der Räder detektieren und diesen einen Fehlercode zuweisen, der dann übertragen wird.

Insbesondere bezüglich Detektion der Blockade der Räder kann die Auswerteeinheit ausgestaltet sein, um sich erst bei Überschreitung eines maximalen Vibrationspegels zu aktivieren. Zur Detektion dieser Art der Vibration wird vorteilhaft nicht der Beschleunigungssensor verwendet, da hierfür die Energieaufnahme zu hoch wäre. Es hat sich gezeigt, dass es vorteilhaft ist, einen weiteren Sensor vorzusehen, bei dem es sich um einen Vibrationssensor mit sehr geringer Stromaufnahme handeln sollte. Dieser wird vorzugsweise so eingestellt und ausgewertet, dass erst bei einer ausreichend starken Vibration die weiteren Schaltungsteile aktiviert werden. Hierzu können bspw. Minimalpegel und Minimaldauer der Vibrationen als Schwellwerte in der Vorrichtung gespeichert werden.

Bei Radblockaden ist zu beachten, dass es im Gegensatz, bspw. zu Antiblockiersystemen, bei der vorliegenden Sensorik darauf ankommt, festzustellen, dass die Räder, bzw. die mit den Rädern fest verbundene Welle, bei einer Bewegung des Schienenfahrzeugs nicht rotieren.

Insgesamt sollte die Energieversorgung einer an einer Fahrzeugsachse bzw. Welle einer Fahrzeugachse angebrachten Vorrichtung so ausgestaltet sein, dass sie autonom etwa 6 Jahre Laufzeit besitzt, ohne zwischendurch aufgeladen werden zu müssen. Es kommen insbesondere Batterien des Typs C (C-Zellen) oder des Typs D (D-Zellen) in Betracht. Diese verfügen über einen geeigneten Energievorrat in Kombination mit einer günstigen Bauform. Es kann sich anbieten, bspw. zwei C-Zellen anstelle einer D-Zelle zu verwenden, um diese so am Umfang der Welle zu verteilen, dass sie sich bezüglich der Gewichtsverteilung gegenseitig mindestens teilweise kompensieren. Akkumulatoren (wiederaufladbare Batterien) haben sich überraschend als weniger geeignet erwiesen. Insoweit wird gemäß einem Aspekt der Erfindung auch eine Vorrichtung gemäß einem oder mehreren der hier offenbarten Aspekte bereitgestellt, die eine oder mehrere Batterien mit den vorgenannten Eigenschaften umfasst.

Gemäß weiteren Aspekten der Erfindung kann eine Infrastruktur bereitgestellt werden, welche die Daten von Beschleunigungssensoren, die erfindungsgemäß an Fahrzeugen, insbesondere Schienenfahrzeugen, wie Güterwaggons, befestigt und erfindungsgemäß ausgestattet sind, erfasst und zentral auswertet. Damit können Nutzungs- und Überwachungsdaten bereitgestellt werden, die in einfacher Weise die Logistik für Schienenfahrzeuge verbessern. Dabei kommt vorteilhaft hinzu, dass sich die Schienenfahrzeuge sehr einfach und ohne langwieriges Zulassungsverfahren nachrüsten lassen. Die Schienenfahrzeuge können vorteilhaft über eine Telematikeinheit verfügen, in welcher Daten aus den an einer oder mehreren Fahrzeugachsen bzw. Wellen von Fahrzeugsachsen befestigten Vorrichtungen gesammelt und weiterübertragen werden.

Gemäß einem Aspekt der Erfindung wurde erkannt, dass die Beschleunigungssensoren als Rotationssensoren, also zur Laufleistungsbestimmung, Geschwindigkeitsbestimmung etc. eingesetzt werden können und in dieser Funktion auch Fehlerbedingungen ermitteln können. Daher ergibt sich eine besonders vorteilhafte synergetische Nutzungsmöglichkeit der Beschleunigungssensoren für rotationsbezogene Parameter und Störgrößen. Dabei ist überraschend festgestellt worden, dass die zur Detektion einer Rotationsbewegung angeordneten Beschleunigungssensoren auch ausgestaltet sein können, um die wichtigsten Fehlbedienungen von Schienenfahrzeugen zu detektieren. Es hat sich außerdem gezeigt, dass es vorteilhaft ist, die Beschleunigungssensoren mit mindestens einem Vibrationssensor zu kombinieren um besser einen der wichtigsten Fehler, nämlich die Blockader Räder, detektieren zu können, ohne dabei das hochsensible Energiebudget des Sensors unangemessen zu belasten. Gerade bezüglich des Energiebudgets konnten unerwartet besonders vorteilhafte Partitionierungen der Auswertung aufgefunden werden. Hierbei ist die Energiebilanz bezüglich Übertragung von Daten, Vorauswertung und Speicherung von Daten beachtlich. Die Erfindung stellt außerdem eine zuverlässige Möglichkeit bereit, die Fahrzeugachsen bzw. Wellen von Fahrzeugachsen-bezogene Laufleistung bei Schienenfahrzeugen (also Laufleistung je Fahrzeugachse des Schienenfahrzeugs) zu differenzieren und daraus Fahrzeugbewertungen vorzunehmen, die über die einfache Gesamtlaufleistung des Schienenfahrzeuges hinausgehen. Im Unterschied zu Kraftfahrzeug-Anwendungen interessieren bei Schienenfahrzeugen grundsätzlich andere Parameter, die eine gänzlich andere Auswertung und Anordnung erfordern. Die Auswertung gemäß der vorliegenden Erfindung sollte außerdem in der Lage sein insbesondere horizontale Stöße über 2,4 g zu detektieren.

Für besonders sicherheitsrelevante Anwendungen, sollte die Speicherung der Daten in der Vorrichtung nicht nur nicht-flüchtig (bspw. EEPROM o.ä.) sein, sondern auch gegen Manipulation geschützt sein. Zudem kann eine einer Fahrzeugachse zugeordnete Vorrichtung, bspw. durch Maßnahmen wie Verplombung gegen Austausch geschützt sein. Die Vorrichtung kann die internen Daten verschlüsseln und eine Authentifizierungsabfrage vorsehen, bevor die Daten ausgelesen oder manipuliert werden können. Dabei kann zwischen Personen unterschiedlicher Funktionen unterschieden werden. Beispielsweise kann die Auswerteeinheit in der Vorrichtung vorsehen, dass nur bestimmtes Wartungspersonal für das Auslesen oder Manipulieren bestimmter Daten zugelassen ist.

Zusammenfassend ermöglichen einige Aspekte der vorliegenden Erfindung die Befestigung von Bauteilen an einem Schienenfahrzeug in vorteilhafter Weise. Die Erfindung basiert unter anderem auf der Erkenntnis, dass die Welle eines Schienenfahrzeugs vorteilhaft zum Befestigen einer Vorrichtung, insbesondere einer Elektronik, verwendet werden kann. Die Anbringung der Vorrichtung muss insbesondere sehr robust sein, jedoch möglichst wenig Auflagefläche auf der Welle bieten. Hierdurch werden Wasseransammlungen vermieden, wodurch die Korrosion der Welle reduziert wird. Eine Kerbwirkung auf der Welle sollte unbedingt vermieden werden. Ebenso sollte eine Beschädigung der Lackierung ausbleiben. Ein zur Befestigung verwendetes Band kann aus Stahl gefertigt sein. Es bietet sich dann jedoch an, auf der Innenseite des Stahlbandes, also der Seite, die der Welle zugewandt ist, ein weiteres Material, wie beispielsweise ein Polymer oder ähnliches zu verwenden. Dieses könnte auf der der Welle zugewandten Seite ein Noppenprofil oder auch ein Autoreifenprofil aufweisen. Hierdurch wird die Auflagefläche weiter reduziert und die Materialien werden geschont. Als Befestigungsmaterial kommen insbesondere weichere Materialien als das der Welle oder der Lackschicht auf der Welle in Betracht. Noppen und Reifenprofile können ebenfalls auf der dem Stahlband zugewandten Seite verwendet werden, da auch hier Korrosionsaspekte relevant sein können. Die Befestigung der Vorrichtung auf der Welle sollte rutschfest sein.

Eine wichtige Charakteristik, welche durch eine Vorrichtung auf der Welle eines Schienenfahrzeugs ermittelt werden könnte, besteht darin, ob sich die Fahrt des Schienenfahrzeugs aufgrund einer Bremswirkung oder aus anderen Gründen verringert. Dabei kann die Vorrichtung insbesondere derart ausgestaltet sein, dass sie zwischen einer Bergfahrt und dem Bremsen des Fahrzeugs unterscheiden kann. Hierzu kann vorteilhaft ein akustischer Sensor in der auf der Welle angeordneten Vorrichtung vorgesehen sein. Die Elektronik kann dann ausgestaltet sein, um charakteristische Wellen oder Spektren auszuwerten. Ebenso kommt der Einsatz eines Infrarotsensors in der Vorrichtung auf der Welle in Betracht. Hierdurch können sogenannte Heißläufer erkannt werden. Ein Infrarotsensor kann insbesondere im gepulsten oder Intervallbetrieb verwendet werden. Hierdurch lassen sich lange Betriebszeiten des Infrarotsensors erreichen. Dies ist beim Einsatz auf Schienenfahrzeugen von besonderer Bedeutung.

Die vorliegende Erfindung betrifft also allgemein Vorrichtungen und damit im Zusammenhang stehende Verfahren, welche auf der Befestigung einer Vorrichtung an der Welle von Schienenfahrzeugen basieren. Diese Vorrichtungen können vorteilhaft, die einen oder mehrere der vorstehend beschriebenen Sensoren und/oder einen oder mehrere Aspekte der Erfindung umfassen. Die Vorrichtung kann dazu ein oder mehrere Teile umfassen, die einzeln oder gemeinsam mit der Welle des Schienenfahrzeugs gekoppelt sein können. Dabei können diese angeordnet sein, um Flieh- oder Torsionskräfte zu minimieren. Ein Teil der Elektronik kann auch an einem anderen Ort am Schienenfahrzeug (Telematikeinheit) vorgesehen sein, solange mindestens ein Teil der Elektronik auch an der Welle befestigt ist.

Gemäß einem weiteren Aspekt der Erfindung kann eine Vorrichtung, die an einer Welle eines Schienenfahrzeugs befestigt ist und gemäß einem der vorstehenden Aspekte der Erfindung ausgestaltet ist, weiterhin ausgestaltet sein, um eine Frequenz einer Eigenschwingung der Welle zu bestimmen. Insbesondere kann die Vorrichtung ausgestaltet sein, um eine Änderung der Frequenz einer Eigenschwingung festzustellen. Diesem Aspekt der Erfindung liegt die Erkenntnis zugrunde, dass Schäden und variierende Belastung einer Welle zur Verschiebung der Eigenresonanzfrequenz der Welle führen können. Die Welle wird im Betrieb auf unterschiedlichste Art und Weisen zur Eigenschwingung angeregt. Diese kann fortwährend in der Vorrichtung gemäß der Erfindung, die an der Welle des Schienenfahrzeugs befestigt ist, detektiert werden. Überschreitet die Eigenresonanzfrequenzabweichung einen bestimmten Schwellwert, so kann ein Alarm ausgelöst werden, wenn die Änderung darauf hinweist, dass die Welle beschädigt ist. Ebenso können Veränderungen der Eigenresonanzfrequenz in Bezug auf die Belastung oder den Verschleiß der Welle ausgewertet werden. Insbesondere ist eine Auswerteeinheit innerhalb der Vorrichtung an der Welle ausgestaltet, um diese Auswertung der Veränderung der Eigenresonanzfrequenz vorzunehmen. Gemäß diesem Aspekt der Erfindung ist die Vorrichtung also ausgestaltet, um eine Eigenfrequenz einer Welle eines Schienenfahrzeugs mittels einer Vorrichtung, die an der Welle befestigt ist, auszunutzen, um eine Schadensanalyse im laufenden Betrieb, insbesondere während der Fahrt des Schienenfahrzeugs vorzunehmen.

Gemäß einem weiteren Aspekt der Erfindung ist keine Fremdanregung der Schwingung der Welle erforderlich. Vielmehr werden hierzu die normalen betriebsüblichen Anregungen der Welle ausgenutzt. Weiter kann die Vorrichtung ausgestaltet sein, um mittels der Verschiebung der Eigenresonanzfrequenz der Welle die Belastung der Welle zu ermitteln. Insbesondere können Rissbildungen an der Welle zur Veränderung der Eigenfrequenz (Eigenresonanzfrequenz) führen. Auf diese Art und Weise können Schäden an Güterwagenradsätzen frühzeitig und während des laufenden Betriebs erkannt werden. Ebenso ist es möglich, das Gewicht der aktuellen Ladung zu messen. Die Vorrichtung an der Welle ist insbesondere ausgestaltet, um Stöße zum Beispiel beim Be- und Entladen, beim Rangieren oder beim Überfahren von Unebenheiten, zum Beispiel Weichen, oder Schnittstellen zwischen Schienen, sowie durch geringe Unebenheiten auf den Laufflächen und/oder auf den Schienen zur Anregung der Eigenschwingung der Welle eines Radsatzes auszunutzen.

Die erfindungsgemäße Vorrichtung kann hierzu Schwingungsaufnehmer (zum Beispiel Beschleunigungssensoren, Körperschallmikrofone etc.) aufweisen, die ausgestaltet sind, um die Eigenschwingung der Welle zu detektieren und zu analysieren. Die Analyse der Schwingung kann gemäß einem Aspekt der Erfindung unmittelbar in der Vorrichtung an der Welle erfolgen und mit Sollwerten verglichen werden. Eine Abweichung von einem Sollwert kann unter Angabe der Identifikation der Vorrichtung an der Welle, bezüglich eines bestimmten Radsatzes oder eines bestimmten Wagen, ermittelt werden und beispielsweise mittels Funkkommunikation weitergegeben werden. Durch Vergleich mit dem Sollwert einer Eigenschwingung oder durch Vergleich von Spektren der Eigenschwingungen kann so frühzeitig festgestellt werden, ob sich Schäden an einer Welle anbahnen und daraus eine Gefahr resultieren kann.

Weitere Aspekte der vorliegenden Erfindung ergeben sich aus der Beschreibung bevorzugter Ausführungsbeispiele sowie anhand der beigefügten Zeichnungen. Hierbei zeigen:

Fig. 1 eine auf einer Welle eines Schienenfahrzeugs angeordnete Vorrichtung gemäß den Aspekten der vorliegenden Erfindung,

Fig. 2 eine weitere Darstellung einer auf einer Welle angeordneten Vorrichtung,

Fig. 3 ein vereinfachtes Blockdiagramm einer Vorrichtung gemäß einem Ausführungsbeispiel der Erfindung,

Fig. 4 eine Darstellung einer Vorrichtung auf einer Welle gemäß einem Ausführungsbeispiel der Erfindung,

Fig. 5 eine Schnitt- und Draufsicht auf eine Drehgestell eines Schienenfahrzeugs mit einer Vorrichtung gemäß Aspekten der Erfindung,

Fig. 6 eine Darstellung einer Vorrichtung auf einer Welle gemäß einem Ausführungsbeispiel der Erfindung,

Fig. 7 eine vereinfachte Darstellung eines seitlichen Querschnitts eines Ausführungsbeispiels der Erfindung,

Fig. 8 eine weitere Ansicht einer vereinfachten Darstellung eines Ausführungsbeispiels der Erfindung,

Fig. 9 eine vereinfachte Darstellung eines Ausführungsbeispiels der Erfindung bezüglich der Anordnung an der Welle einer Fahrzeugachse eines Schienenfahrzeugs,

Fig. 10 eine vereinfachte Darstellung eines Ausführungsbeispiels der Erfindung bezüglich der Anordnung an der Welle einer Fahrzeugachse eines Schienenfahrzeugs,

Fig. 11 eine vereinfachte Darstellung eines Schienenfahrzeugs mit einer Vorrichtung und einer möglichen Infrastruktur gemäß Aspekten der Erfindung,

Fig. 12 eine Darstellung eines Ausführungsbeispiels bezüglich eines Beschleunigungssensors,

Fig. 13 eine Darstellung eines Ausführungsbeispiels bezüglich eines Beschleunigungssensors,

Fig. 14    ein Diagramm mit beispielhaften zeitlichen Verläufen zweier Signale eines Beschleunigungssensors bei einer erfindungsgemäßen Vorrichtung bei kontinuierlicher Vorwärtsfahrt des Fahrzeugs,

Fig. 15    ein Diagramm mit beispielhaften zeitlichen Verläufen zweier Signale eines Beschleunigungssensors bei einer erfindungsgemäßen Vorrichtung bei kontinuierlicher Rückwärtsfahrt,

Fig. 16    ein Diagramm mit beispielhaften zeitlichen Verläufen zweier Signale eines Beschleunigungssensors bei einer erfindungsgemäßen Vorrichtung bei kontinuierlicher Vorwärtsfahrt und einer beispielhaften Störung an Rad oder Lager,

Fig. 17    ein Diagramm mit beispielhaften zeitlichen Verläufen zweier Signale eines Beschleunigungssensors bei einer erfindungsgemäßen Vorrichtung bei kontinuierlicher Vorwärtsfahrt und einer beispielhaften Störung am Untergrund,

Fig. 18    ein Diagramm mit beispielhaften zeitlichen Verläufen zweier Signale eines Beschleunigungssensors bei einer erfindungsgemäßen Vorrichtung bei kontinuierlicher Vorwärtsfahrt und einem Stoß in horizontaler Richtung,

Fig. 19    ein Diagramm mit beispielhaften zeitlichen Verläufen zweier Signale eines Beschleunigungssensors bei einer erfindungsgemäßen Vorrichtung bei blockierter Welle,

Fig. 20    ein Diagramm mit beispielhaften zeitlichen Verläufen zweier Signale eines Beschleunigungssensors bei einer erfindungsgemäßen Vorrichtung bei Entgleisung, und

Fig. 21    eine vereinfachte Darstellung von Aspekten der Erfindung betreffend die Bestimmung der Wagenreihung eines Schienenfahrzeugs.

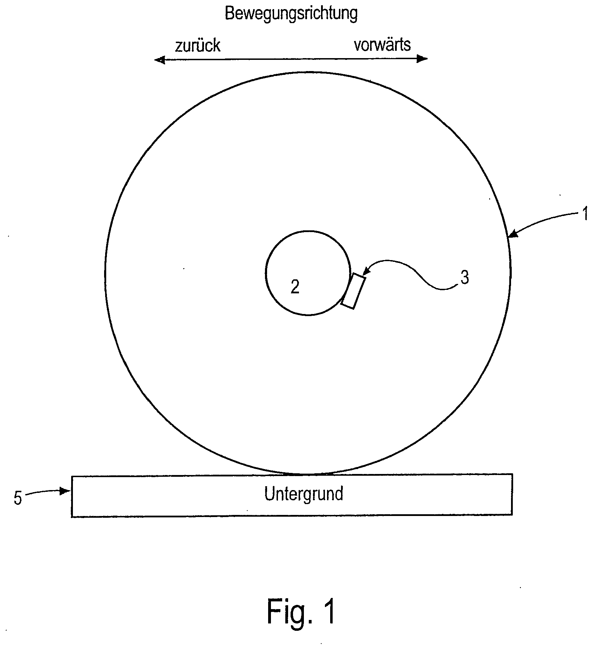

Fig. 1 zeigt eine vereinfachte Darstellung eines Ausschnitts eines Ausführungsbeispiels einer erfindungsgemäßen Vorrichtung. Dargestellt ist ein Rad 1, beispielsweise eines Schienenfahrzeugs mit einem Aufbau (nicht dargestellt). Am Rad 1 ist eine Fahrzeugachse bzw. die Welle 2 einer Fahrzeugachse (im Kontext der vorliegenden Erfindung häufig vereinfachend nur als Welle bezeichnet) angebracht, die in die Bildebene hineinragt, sodass lediglich ihre Querschnittfläche dargestellt ist. Die Welle 2 kann typischerweise zwei gleichartige Räder 1 des Schienenfahrzeugs verbinden. An der Welle 2 ist eine Vorrichtung 3 angeordnet, die gemäß unterschiedlichen hierin beschriebenen Aspekten der Erfindung ausgestaltet sein kann. Ganz allgemein ist die Vorrichtung auf der Welle angeordnet anstatt an andere Stellen des Schienenfahrzeugs. Das Rad 1 rollt bei einer Vorwärts- oder Rückwärtsbewegung des Schienenfahrzeugs über den Untergrund 5, der beispielsweise eine Schiene sein kann. In der Vorrichtung 3 können unterschiedlichste Sensoren, bspw. ein Mikroprozessor, ein Speicher, insbesondere Halbleiterspeicher, ein Funkmodul oder Funkmodule zum Empfangen und/oder Senden von Daten vorgesehen sein. Insofern kann innerhalb der Vorrichtung 3 bereits eine teilweise oder vollständige Vorverarbeitung der empfangenen oder erfassten Daten erfolgen. Auf Basis der Sensorsignale können dann u.a. die zurückgelegte Strecke (Laufleistung), Stillstand, Blockade der Räder, Geschwindigkeit, abnormale Betriebszustände (Verschleiß, Entgleisung), Gleisschäden, Rangierstöße und Betriebsdauer, Temperaturen, Positionen, Fahrzeugzustände, Betriebszustände etc. ermittelt werden.

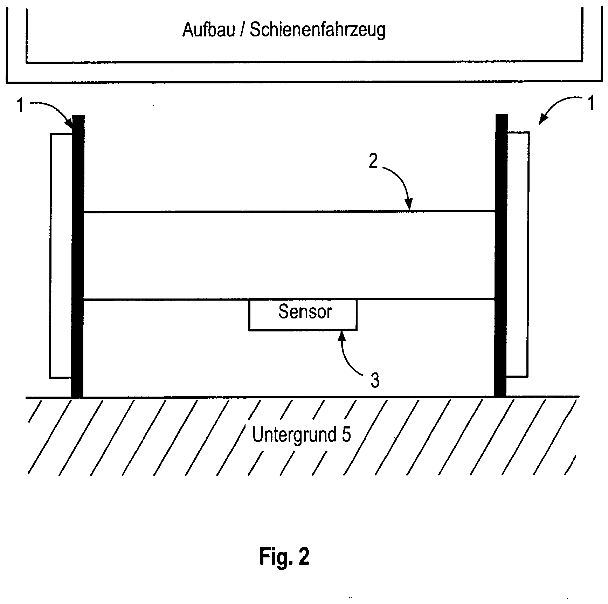

Fig. 2 zeigt eine weitere vereinfachte Darstellung des Ausführungsbeispiels gemäß Fig. 1. Dargestellt sind die Räder 1 und eine Welle 2 eines Schienenfahrzeugs, auf der eine erfindungsgemäße Vorrichtung gemäß einem Ausführungsbeispiel der Erfindung angeordnet ist. Zu sehen ist insbesondere die Vorrichtung 3, die wie zuvor ausgeführt, Sensoren und weitere elektronische Komponenten zur Vorverarbeitung und Übertragung der Daten beinhalten kann. Der Aufbau des Schienenfahrzeugs kann völlig unterschiedlich gestaltet sein, weshalb die Befestigung der Vorrichtung an der Welle besonders vorteilhaft ist.

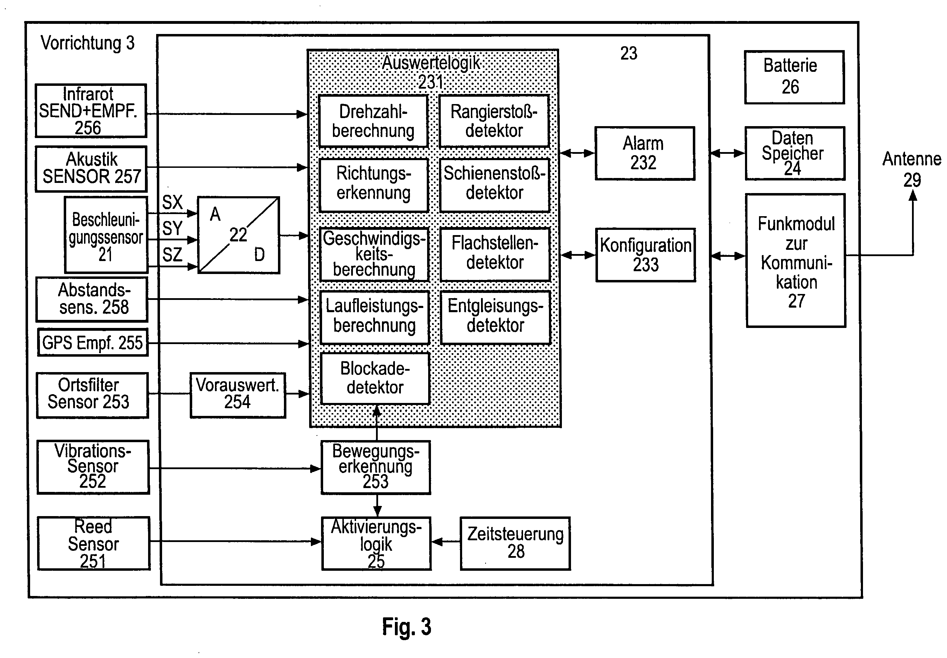

Fig. 3 zeigt ein vereinfachtes Blockdiagramm einer Vorrichtung 3, wie sie an einer Welle 2 eines Schienenfahrzeugs befestigt sein kann. Die Vorrichtung 3 kann je nach Ausgestaltung unterschiedliche Sensoren umfassen und deren Signale in unterschiedlichem Umfang verarbeiten, speichern und weiterleiten. Die Sensoren können insbesondere ein Infrarotsensor 256 zur Temperaturmessung, ein Körperschallsensor 257 zur Erfassung der Schwingungen der Welle, ein Beschleunigungssensor 21, ein Abstandssensor 258, ein GPS-Empfänger 255 zur Positionsbestimmung, ein Ortsfilter-Sensor 253, je nach implementierter Ortsfilterfunktion, ein Vibrationssensor 252 und/oder ein Reed-Sensor 251 sein.

Der Infrarotsensor 256 kann Infrarotsignale auswerten, um so die Temperatur der Welle, des Rades 1 oder anderer Teile des Schienenfahrzeugs oder der Umgebung zu ermitteln. Eine vorteilhafte Anwendung der Temperaturmessung in Kombination mit dem Infrarotsensor ist die Erkennung von Heißläufern. Eine entsprechende Fehlermeldung kann dann von der Vorrichtung gespeichert und/oder nach außen übermittelt werden. Dadurch können Schäden vermieden werden. Der Infrarotsensor kann vorteilhaft gepulst und/oder in Intervallen betrieben werden, um nur geringe Leistung zu verbrauchen. Ein Infrarotsensor kann vorteilhaft zur Abbildung der Bremsscheibe eingesetzt werden.

Der Körperschallsensor 257 kann allgemein dazu dienen, festzustellen, ob gebremst wird oder nicht. Dadurch kann ermittelt werden, ob sich die Fahrt bspw. wegen einer Steigung verlangsamt, oder weil gebremst wird. Bei der Verwendung des Körperschall-Sensors können charakteristische Wellen oder Spektren detektiert werden.

Der Beschleunigungssensor 21 kann in ein, zwei und/oder drei Richtungen (X, Y und Z-Achse gemäß Fig. 1 und 2) statische Beschleunigungen messen und gibt entsprechend drei den Achsen zugeordnete Signale SX, SY und SZ aus (3-dimensionaler Sensor). Es kann sich in vereinfachten Ausführungen auch um einen 1- oder 2-dimensionalen Sensor handeln. Diese sind im vorliegenden Ausführungsbeispiel analoge Signale und werden daher zunächst im Analog-Digital-Wandler 22 digitalisiert. Die digitalisierten Sensorsignale werden dann einer Auswertelogik 231 zugeführt, der mit dem Analog-Digital-Wandler 22 gekoppelt ist. Die Auswertelogik 231 bzw. Auswertroutine, die im einfachsten Fall lediglich geeignet ist, die empfangenen Sensordaten im Datenspeicher 24 zu speichern und/oder diese Daten mittels eines Funkmoduls 27 über eine Antenne 29 an eine weitere Auswerteeinheit zu übertragen, kann festverdrahtet sein oder als eingebettetes Mikrocontroller System implementiert sein (Embedded Mikrocontroller System). Daneben kann die Vorrichtung 3 eine Aktivierungslogik 25 und eine Bewegungserkennung 253 enthalten, die dafür sorgen, dass die Vorrichtung nur eingeschaltet wird, wenn sie benötigt wird. Dazu kann die Aktivierungslogik 25 mit einem Reed Sensor 251 gekoppelt sein, der zum Auslesen oder Einschreiben von Daten aus oder in die Vorrichtung 3 mittels eines externen Feldes angeregt wird. Dass kann beim Heranführen eines Schreib/Lesegerätes 12 (später beschrieben) geschehen. Der Reed Sensor 251 kann insbesondere dadurch aktiviert werden, dass temporär ein Magnet in unmittelbare Nähe (wenige Zentimeter) an den Laufleistungssensor 3 gehalten wird. Ein Vorteil der Verwendung des Reed Sensors besteht darin, dass er selbst keine Energie benötigt, sondern nur die Aktivierungslogik 25 Strom verbraucht. Die Stromaufnahme der Aktivierungslogik 25 kann jedoch sehr gering gehalten werden. Der Reed Sensor ist sehr preiswert. Er ist berührungs- und kontaktlos und damit problemlos in ein robustes Gehäuse zu integrieren. Ein weiterer Vorteil kann erreicht werden, wenn ein geringer Abstand zwischen Magneten und Vorrichtung 3 zur Aktivierung eingerichtet wird. Dadurch ist es möglich, wenn mehrere Vorrichtungen 3 an einem Güterwagen installiert sind, gezielt nur eine bestimmte Vorrichtung 3 zu aktivieren.

Die Bewegungserkennungslogik 253 kann vorteilhaft mit einem Vibrationssensor 252 gekoppelt sein. Aufgrund der langen Zeit von 6 bis 7 Jahren, die eine Vorrichtung 3 autonom arbeiten soll, ist ein angepasstes Energiemanagement vorteilhaft. Ein Vibrationssensor 252 sollte möglichst ausgestaltet sein, um Erschütterungen in allen Richtungen gleichermaßen zu erfassen. Die Stromaufnahme sollte ebenfalls sehr gering sein. Ein vorteilhafter Vibrationssensor für den Einsatz im vorliegenden Ausführungsbeispiel kann ein Vibrationssensor nach dem Kugel-Schalt-Prinzip (Ball-Switch) sein. Der Vibrationssensor 252 kann mit einem großen Vorwiderstand an eine Spannung gekoppelt werden und mit einer Bewegungserkennungslogik 253 gekoppelt sein. Diese sorgt dafür, dass bei jeder Erschütterung eine Flanke in einem Signal erzeugt wird. Diese Flanken werden vorteilhaft integriert (gezählt). Eine Aktivierung der Vorrichtung 3 erfolgt erst, wenn eine maximale Anzahl von Flanken (Erschütterungen) überschritten wurde (bspw. innerhalb eines bestimmten Zeitfensters). Dadurch kann sichergestellt werden, dass die Aktivierung nicht zu früh, bzw. bei zu geringen Erschütterungen in Folge einer Beladung des Schienenfahrzeugs, erfolgt. Die Vibration kann in Form eines Rauschpegels oder eine maximalen Erschütterungszahl in der Vorrichtung als Parameter abgelegt werden. Dadurch kann auf spezifische Fahrzeug- oder Benutzungseigenheiten Rücksicht genommen werden. Durch die Aktivierung der Vorrichtung 3, wird auch erst der Beschleunigungssensor 21 aktiviert, der zur Bestimmung der Rotation der Welle 2 eingesetzt wird. Vorteilhaft lässt sich dadurch feststellen, ob die Welle 2 rotiert und ob ggf. eine Blockade der Räder vorliegt.

Eine Zeitsteuerung 28 zur Bereitstellung einer Zeitbasis (z.B. Echtzeit und/oder Taktung für die Komponenten der Vorrichtung und zur Auswertung der Signale mittels eines Zeitnormals) kann ebenfalls vorgesehen sein. Eine Batterie 26 stellt die erforderliche Energie bereit, wobei alternativ natürlich auch Akkus, oder andere Energieerzeuger vorgesehen sein können, die einen möglichst langen autonomen Betrieb der Vorrichtung 3 ermöglichen. Vorteilhaft kommen Batterien in Betracht, die 8 Ah bzw. 19 Ah bereitstellen. Dies ist bei C-Zellen oder D-Zellen der Fall. Damit kann mit der erfindungsgemäß eingerichteten Vorrichtung 3 eine Laufzeit von 6 bis 7 Jahren erreicht werden.

Die Auswertung in der Einheit 23 kann über das Zwischenspeichern und/oder Übertragen der Sensordaten SX, SY, und/oder SZ hinausgehen. Es kann vorgesehen sein bestimmte Auswertungsschritte bereits innerhalb der Vorrichtung 3 vorzunehmen, um die Datenmenge zur Speicherung/Übertragung zu reduzieren oder eine nachträgliche Auswertung entbehrlich zu machen. So könnten bspw. unmittelbar die Anzahl der Umdrehungen der Räder oder die zurückgelegte Strecke basierend auf den Sensorsignalen SX, SY und SZ bereitgestellt werden. Außerdem könnten bestimmte Fehlersignale (Blockade der Räder) mit Zeitangaben, wie Zeitpunkt und/oder Dauer des Fehlers berechnet und/oder übertragen werden. Eine derartige Auswertung der Daten kann aber auch in einer separaten Auswerteeinheit erfolgen, die am Schienenfahrzeug befestigt ist, oder stationär außerhalb des Schienenfahrzeugs bereitgestellt wird. Eine Auswertelogik 231 kann also insbesondere vorsehen: Drehzahlberechnung, Richtungserkennung, Geschwindigkeitsberechnung, Laufleistungsberechnung, in Kombination mit einem oder mehreren Fehlern, wie Rangierstoßdetektor (bspw. mit Grenzwert > 2.4 g), Schienenstoßdetektor, Flachstellendetektor, Entgleisungsdetektor und/oder Blockadedetektor.

Anstelle des Funkmoduls 27 können auch andere Schnittstellen vorgesehen sein, die drahtlos oder drahtgebunden das Auslesen der Daten des Beschleunigungssensors ermöglichen. Insbesondere kommen GSM, Bluetooth, UMTS, WLAN oder andere Funkschnittstellen in Betracht.

Mittels einer Konfigurationsstufe 233 kann die Vorrichtung auf unterschiedliche Gegebenheiten vorkonfiguriert werden. Weiter kann eine Alarmstufe 232 vorgesehen sein, die bei detektierten Fehlern Alarm auslöst.

Es hat sich gezeigt, dass es vorteilhaft ist, zahlreiche Sensordaten, wie bspw. die Sensordaten SX, SY, SZ in der Vorrichtung 3 vor zu verarbeiten, wie oben beschrieben, und bereits die berechneten Größen (Laufleistung bzw. km-Stand, Blockade der Räder, Fehlercodes etc.) auszugeben, bzw. zu übertragen. Dies ist insbesondere im Zusammenhang mit einer Telematikeinheit 13 (später beschrieben) vorteilhaft, welche die Daten einer oder mehrerer Vorrichtungen 3, die an mehreren Fahrzeugachsen 2 des Schienenfahrzeugs befestigt sein können, empfängt. Eine Vorrichtung 3 kann demnach einer Welle 2 eines Schienenfahrzeugs zugeordnet sein.

Die Vorrichtung 3 kann ausgestaltet sein, um wichtige Parameter zu empfangen und zu speichern. Hierzu gehören bspw. der Raddurchmesser (oder Radius) um die Laufleistung berechnen zu können. Außerdem können vorteilhaft verschiedene fahrzeugspezifische Parameter, wie bspw. Rauschsignalpegel bzw. Rauschsignalamplitude bei Blockade der Räder oder Entgleisung, Vorgeschichte des Schienenfahrzeugs (bereits gelaufene km oder Baujahr) in den Speicher 24 der Vorrichtung eingeschrieben werden. Außerdem können maximale Werte für vertikale oder horizontale Stöße (bspw. 2,4 g, wobei g die Erdbeschleunigung ist) eingetragen werden. Aufgrund der Parameter vermag die Vorrichtung 3 autonom bestimmte rotationsspezifische und fehlerbedingte Größen zu berechnen und die Ergebnisse auszugeben. Die Ausgabe kann in Form fertiger Fehlercodes und km-Werte erfolgen. Gemäß eines weiteren Aspekts der Erfindung werden die Parameter und/oder berechneten Werte in der Vorrichtung 3 gegen Manipulation geschützt. Hierfür können Verschlüsselungsverfahren verwendet werden.

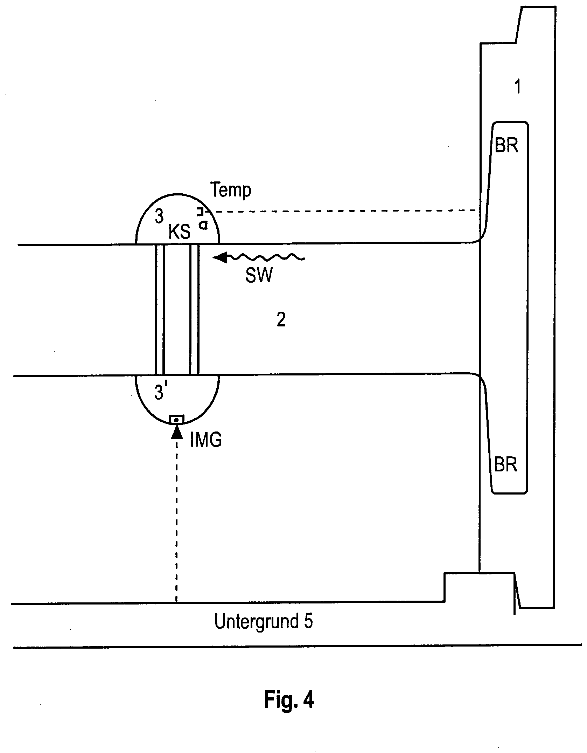

Fig. 4 zeigt einen Ausschnitt eines Schienenfahrzeugs, bei dem Temperaturmessung und Verwendung eines Bildsensors IMG verdeutlicht werden. Die Vorrichtung 3 ist allgemein an der Welle 2 der Fahrzeugachse eines Schienenfahrzeugs angeordnet. Sie bewegt sich mit der Welle 2 mit, wobei die Vorrichtung 3 dadurch um die Welle herum rotiert. Diese Drehung erfolgt im Einklang mit der Drehung des Rades 1. Tritt ein Heißläufer im Achslager auf, wird dies mittels eines Temperatursensors TEMP ermittelt. Der Temperatursensor kann ein Infrarotsensor sein.

Die Vorrichtung 3 kann vorteilhaft auch einen Körperschallsensor KS aufweisen. Dieser könnte Schallwellen SW detektieren, die dann ausgewertet werden. Die Betätigung der Bremse könnte dann auf akustischem Wege durch die Schallwellen SW durch die Welle detektiert werden, da das Betätigen der Bremsen typische akustische Muster (Spektren, Oberwellen etc.) verursacht. Auch andere Fehlerzustände bzw. Fehlbedingungen können durch den Körperschallsensor detektiert werden.

Auch ein Bildsensor IMG könnte in der erfindungsgemäßen Vorrichtung an der Welle vorgesehen sein. Der Bildsensor IMG könnte dann ein Bild oder auch nur eine Helligkeitssignal des Untergrundes 5 empfangen. Dabei kann er vorteilhaft mit der Drehbewegung der Welle synchronisiert sein. Dies gelingt bspw. durch Auswertung von Signalen eines Beschleunigungssensors, wie er hierin ausführlich beschrieben ist. Das Bild des Untergrundes kann dann ausgewertet werden, um eine absolute oder aber vorteilhaft auch nur ein relative Position innerhalb einer bekannten Strecke zu ermitteln. Hierfür kann der Bildsensor bspw. nur Helligkeitswerte oder bestimmte Farbwerte detektieren. Die Detektion kann immer nur dann erfolgen, wenn der Sensor nach unten zum Untergrund hin ausgerichtet ist. Dadurch kann Energie gespart werden und die Ortsfilterung kann vereinfacht werden. Die detektieren Bilder (oder auch nur Bildwerte, Punkte etc.) können dann mit bekannten Mustern verglichen werden, um so die Position zu bestimmen.

Andere Ortsfilterverfahren können vorteilhaft die Signale von Beschleunigungssensoren verwenden, wie sie später noch detailliert beschreiben sind.

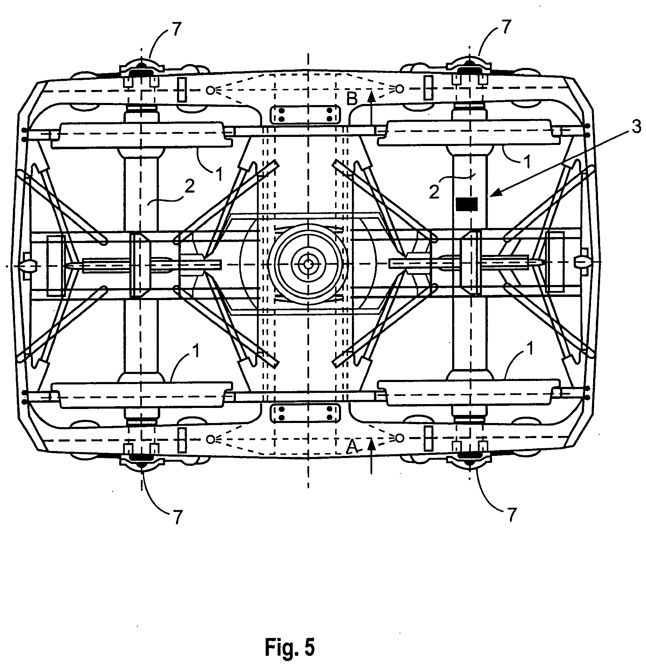

Fig. 5 zeigt weitere Aspekte der Erfindung. Die erfindungsgemäße Vorrichtung 3 wird allgemein an einer Welle eines Schienenfahrzeugs gemäß einem oder mehreren Aspekten der Erfindung angeordnet. Die Vorrichtung 3 kann einen oder mehrere der zuvor und später genannten Sensoren und entsprechende Auswertung und/oder Speicherung und/oder drahtlose Datenübertragungsmittel enthalten. Die Vorrichtung 3 wird bei einem Schienenfahrzeug mit einem Drehgestell vorteilhaft so angeordnet, wie in Fig. 5 dargestellt. Die Vorrichtung 3 kann vorteilhaft nicht genau in der Mitte M der Welle 2 angeordnet sein. Dies bietet mehr Raum bei der Rotation um die Welle 2. Außerdem besteht in dieser Position oft vorteilhaft Sichtverbindung zum Boden des Transportbehälters des Schienenfahrzeugs. Das ermöglicht bspw. vorteilhaft die Abstandsmessung zur Bestimmung des Beladezustands. Erfindungsgemäße Vorrichtungen 3 können auf einer oder mehreren Wellen 2 des Drehgestells angeordnet sein. Die Federung 7 befindet sich außerhalb der Räder. Dies wird vorteilhaft ausgenutzt, weil dadurch freie Sicht von der Vorrichtung 3 auf die Räder 1 besteht. Dies ermöglicht andere zuvor oder später genannten Messungen mit der Vorrichtung 3.

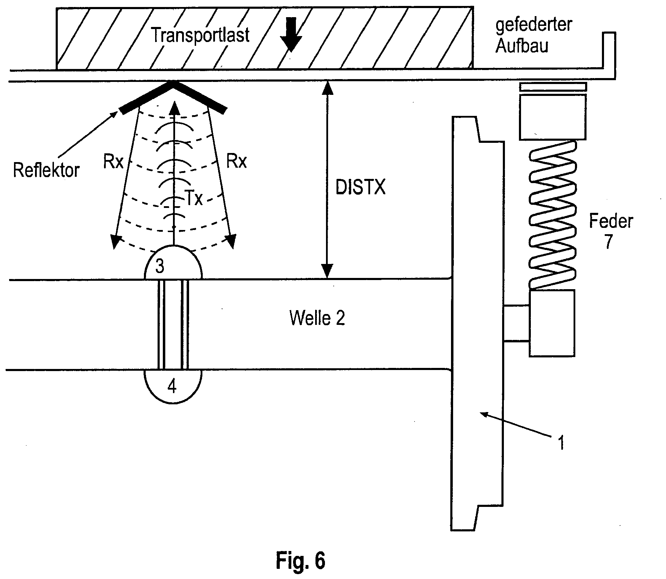

Fig. 6 zeigt ein weiteres Ausführungsbeispiel der Erfindung. In einer weiteren Ausgestaltung kann ein Sensor zur Abstandsmessung 258 vorgesehen sein. Dieser kann vorteilhaft ausgestaltet sein, um den Abstand zur Güterwagenunterseite oder anderen bekannten ortsfesten Teilen von der Welle aus zu bestimmen. Grundsätzlich kommen Ultraschallsender und -empfänger in Betracht, die eine Abstandsmessung mit Ultraschall ermöglichen. Allerdings können diese unter Umständen den gegebenen Umgebungsbedingungen möglicherweise nicht Stand halten, und bei der Rotation ggf. nicht genau genug messen. Daher kann vorteilhaft auch ein Funk-basierter Sensor vorgesehen sein, wie dies in Fig. 6 dargestellt ist. Der in der Vorrichtung 3 angeordnete Sender kann Pulssignale TX aussenden und deren Rückstreuung RX messen. Hieraus lässt sich der Abstand DISTX zwischen dem Boden des Aufbaus des Schienenfahrzeugs und der Welle 2 (bzw. der Vorrichtung 3) messen. Diese nach Art eines Radars arbeitende Methode kann gegenüber Ultraschall vorteilhaft sein. Die Abstandsmessung kann genutzt werden, um den Beladungszustand des Schienenfahrzeugs, bspw. eines Güterwagens, zu bestimmen. Aufgrund der Federung 7 eines Schienenfahrzeugs verringert sich der Abstand DISTX zwischen einer Welle 2 der Fahrzeugachse und dem Boden des Aufbaus, wenn das Fahrzeug beladen wird. Aufgrund dessen kann der Abstand zur Beladungsmessung herangezogen werden. Vorteilhaft kann die Abstandsmessung mit der Drehbewegung der Achse synchronisiert werden. Hierzu können die Beschleunigungssensoren gemäß zahlreichen Aspekten der Erfindung verwendet werden. Dadurch kann gezielt der Abstand zu einer definierten Rückstreufläche in einer bestimmten Ausrichtung der Welle vorteilshafterweise nach oben ermittelt werden. Hier bietet sich auch die Anbringung eines Radarreflektors an, der ein definiertes reproduzierbares Rücksignal erzeugt. Ein solcher Reflektor erzeugt durch seine, der Radarfrequenz angepassten Form und Größe eine sehr kräftige Signalspiegelung. Damit lässt sich das Rückkehrsignal sehr gut von Reflektionen an anderen Bauteilen der Wagenunterseite unterscheiden. Der Radarreflektor kann vorteilhaft an der Unterseite Wagens über der Welle angebracht sein.

Die Synchronisation der Abstandsmessung mit der Drehbewegung der Achse führt darüber hinaus auch zu einer Verringerung der für die Signalerzeugung notwendigen Energie.

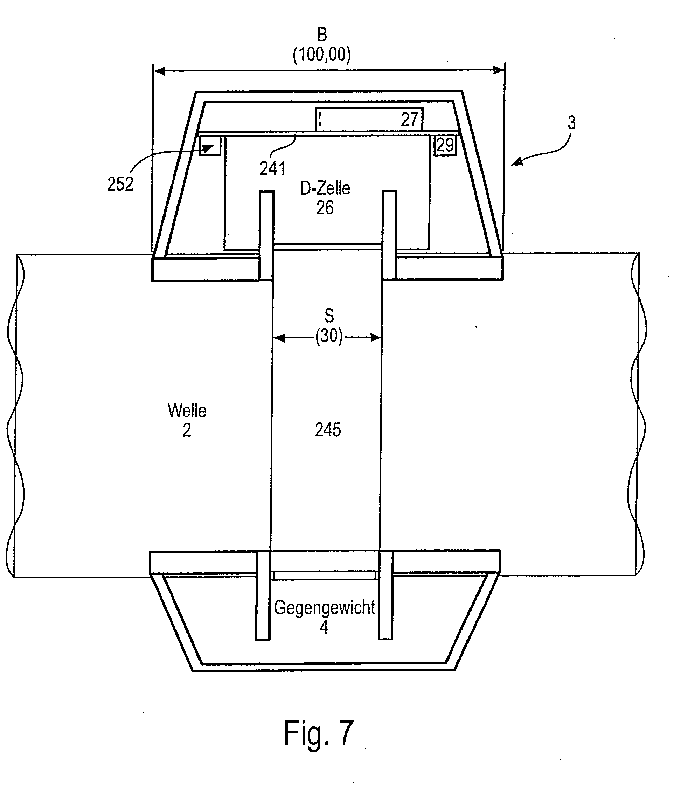

Fig. 7 zeigt eine vereinfachte Darstellung eines Ausführungsbeispiels der Erfindung. Bei dieser Darstellung stehen die körperliche Ausgestaltung und die Befestigung an der Welle 2 einer Fahrzeugachse eines Schienenfahrzeugs im Vordergrund. Die Vorrichtung 3 wird vorteilhaft in einem robusten Gehäuse untergebracht. Die Batterie 26 (hier bspw. eine D-Zelle) ist möglichst dicht an der Welle 2 anzuordnen. Die Grundform des Gehäuses für die Vorrichtung 3 kann an der Welle 2 breiter ausgeführt sein. Die genannten Aspekte haben vorteilhafte Auswirkungen auf die auftretenden Kräfte, die bei der vorliegenden Anwendung ungewöhnlich hoch werden können. Die Vorrichtung 3 kann mittels eines oder mehrerer umlaufender Stahlbänder 245 befestigt werden. Das ermöglicht das Nachrüsten mit minimalem Zeitaufwand. Die Breite S des Stahlbandes 245 kann vorteilhaft etwa S=30 mm betragen. Die Breite B der Vorrichtung 3 in axiale Richtung der Welle kann dann vorteilhaft 100 mm nicht überschreiten. Das Verhältnis zwischen Breite S des Stahlbandes 245 und der Breite B der Vorrichtung 3 kann etwa S:B=1:3.3 betragen. Auf der gegenüberliegenden Seite der Welle 2, ist ein Gegengewicht 4 vorgesehen, um die Unwucht auszugleichen. Im Querschnitt haben die Gehäuse der Vorrichtung 3 und das Gegengewicht 4 ein annähernd trapezförmiges Profil, bzw. einen breiten Sockel. Auch ein halbkreisförmiges oder gewölbtes Profil kommt in Betracht. Wichtig ist die Vermeidung von Torsionskräften am Sensormodul 3. Die Elektronik kann auf der Außenseite der Vorrichtung 3 angebracht sein. In dieser schematischen Darstellung sind stellvertretend für die gesamte Elektronik eine Platine 241, der Vibrationssensor 252, ein Funkmodul 27 und eine Antenne 29 gezeigt. Vibrationssensor 252 und Antenne 29 befinden sich im die Batterie 26 überlappenden Teil der Platine und zwar auf der Innenseite (zur Welle gewandt) der Platine 241. Der Speicher (nicht gezeigt) sollte ein nicht-flüchtiger Speicher (bspw. EEPROM) sein. Die Vorrichtung 3 kann vorteilhaft in der Mitte der Welle 2 bzw. Fahrzeugachse angeordnet sein.

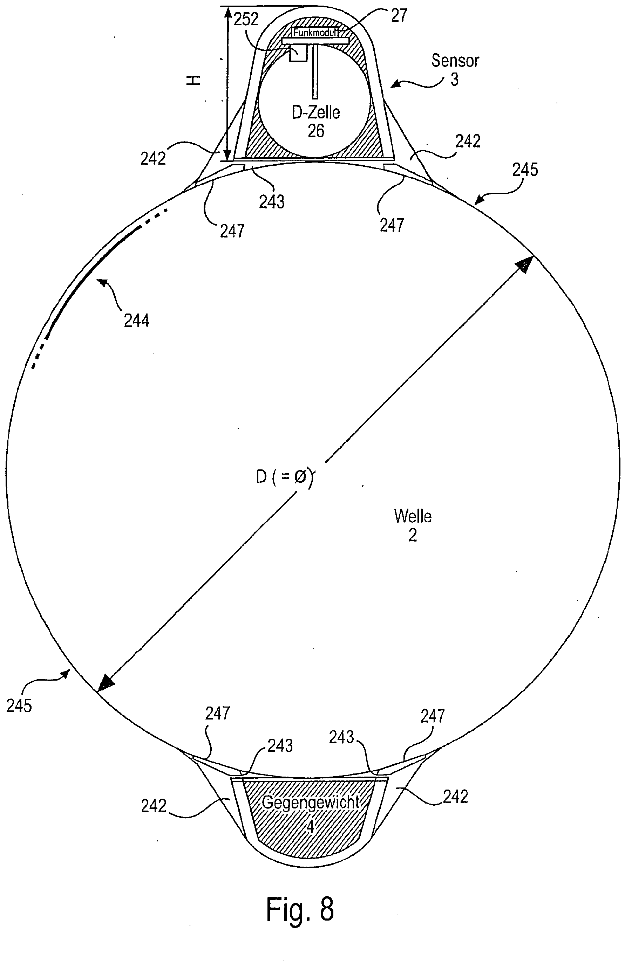

Fig. 8 zeigt einen Schnitt durch die Welle 2 sowie die Vorrichtung 3 und das Gegengewicht 4, um weitere vorteilhafte Aspekte der Erfindung hervorzuheben. Die Gehäuse für die Vorrichtung 3 und das Gegengewicht 4 sind in umlaufender Richtung der Welle 2 abgerundet und passen sich dadurch besser dem Wellenumfang an. Verstärkungsstreben 242 können vorgesehen sein, um Torsions- und andere Kräfte aufzunehmen. Das Stahlband 245 läuft um die Welle 2 und durch Durchschübe 243 der Gehäuse für Vorrichtung 3 und Gegengewicht 4. In der Vorrichtung sind vereinfachend die Batterie 26, die Platine 241, das Funkmodul 27 und der Vibrationssensor 252 angedeutet. Dort befindet sich die ein Teil oder die ganze weitere Elektronik, wie sie in Fig. 3 dargestellt ist. Insbesondere befindet sich dort auch der Beschleunigungssensor 21. Die Höhe H der Vorrichtung 3 kann im Bereich von H= 45 mm liegen. Das Verhältnis von Höhe H zu Breite B der Vorrichtung kann also etwa bei H:B=1:2 liegen. Die Welle kann einen Durchmesser D von 173 mm aufweisen, wobei auch D=160 mm und ggf. abweichende Durchmesser in Betracht kommen. Daher ist die Verwendung eines Stahlbandes vorteilhaft, dessen Länge flexibel eingestellt werden kann, um verschiedenen Wellendurchmessern gerecht zu werden. Durch Verwendung eines Stahlbandes und Gehäusen mit Durchschüben 243 wird der Nachrüstvorgang erleichtert. Eine Verschiebung der Vorrichtung 3 und des Gegengewichts 4 unter dem Stahlband wird durch einen vordefinierten hohen Anpressdruck auf die Fahrzeugachse bzw. Welle und vorteilhaft durch eine mechanische Sicherung der zwei Gehäuseteile unter dem Stahlband verhindert.

Der Kraftschluss zwischen der Welle 2 und dem umlaufenden Band 245 sollte so gewählt werden, dass keine Kerbwirkung auf die Welle 2 eintritt. Auch eine Beschädigung einer Lackschicht auf der Welle 2 sollte vermieden werden.

Die Dimensionierung der Vorrichtung in Bezug auf den Achs- bzw. Wellendurchmesser kann sich also wie folgt ergeben: D:B:H:S=180:100:45:30=6:3.3:1.5:1. Von diesen Werten kann vorteilhaft nicht deutlich (also jeweils nicht mehr als 50% Abweichung) abgewichen werden, wenn eine Befestigung mit einem Stahlband an der Welle 2 in einfacher Weise angestrebt wird.

Ein weiterer Aspekt ist die Korrosion zwischen Stahlband 245 und Welle 2. Es kann vorteilhaft sein, zwischen Stahlband 245 und Welle 2 eine weitere Lage 244 vorzusehen, die geeignet ist, Korrosion zu verhindern. Diese Lage 244 ist lediglich illustrierend auf einem Stück des Umfangs der Welle 2 dargestellt, würde jedoch ganz um die Welle 2 unter dem Stahlband 245 entlang laufen. Die der Welle 2 zugewandte Seite der Lage 244 könnte dann Noppen oder auch eine Reifenprofil aufweisen. Sie könnte vorteilhaft so ausgestaltet sein, dass eine sichere Befestigung vorliegt, die jedoch keinen Schaden der Welle zur Folge hat und möglichst wenig Feuchtigkeit zurückhält. Die Stützelemente 247 (in der Art von Füßen) sind angeneigt, um der Krümmung der Welle gerecht zu werden. Das erhöht die Robustheit und Widerstandsfähigkeit gegen Torsions-, Flieh und Beschleunigungskräfte. Durch Verwendung von mehreren geneigten Füßen an den Gehäuseaußenseiten ergibt sich eine Selbstausrichtung des Sensors auf der Achse, durch die bei der Montage sichergestellt werden kann, dass die Messachsen der internen Sensoren exakt parallel bzw. orthogonal zur Welle ausgerichtet sind.

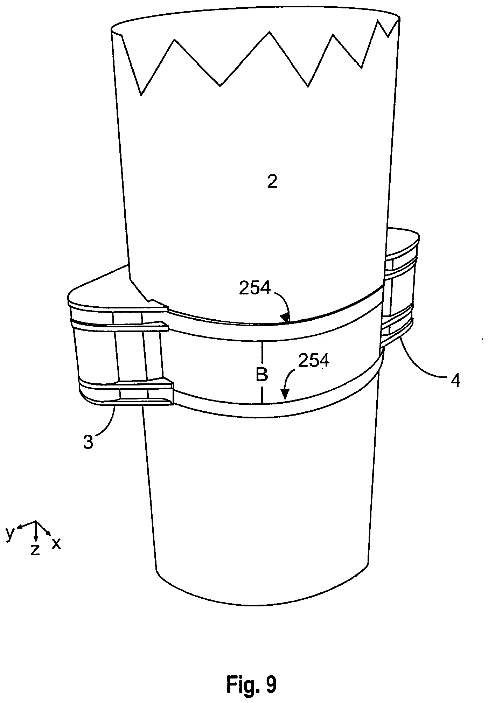

Fig. 9 zeigt eine perspektivische Ausgestaltung einer weiteren vorteilhaften Ausgestaltung einer Kopplung der Vorrichtung 3 mit einer Welle 2. Bei dieser Ausgestaltung kommen zwei umlaufende Bänder (bspw. Stahlbänder) 254 zum Einsatz. Hierdurch kann die Neigung zur Korrosion weiter vermindert werden. Im Übrigen kann die Ausgestaltung ähnlich wie zuvor beschrieben sein. Die Größenverhältnisse können dann auf die beiden Bänder übertragen werden, wobei anstelle der Breite S des Stahlbandes 254 in Fig. 8, nun der Abstand der Außenkanten der beiden Stahlbänder zu berücksichtigen ist.

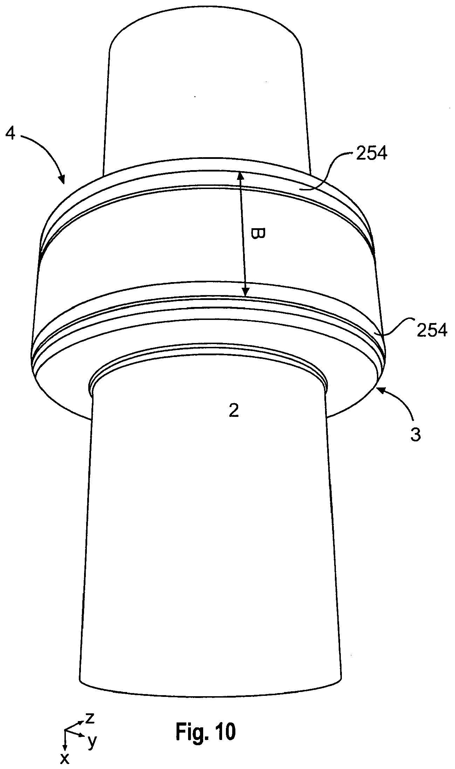

Fig. 10 zeigt eine perspektivische Darstellung einer weiteren vorteilhaften Ausgestaltung einer Kopplung einer Vorrichtung 3 mit einer Welle 2. Bei diesem Ausführungsbeispiel ist eine geschlossene umlaufende Manschette vorgesehen, in der die Vorrichtung 3 nebst optionalem Gegengewicht untergebracht sein kann. Das umlaufende Gehäuse bietet zusätzlichen Schutz gegen Steinschlag, Abrieb, Manipulation etc. Die Manschette bietet auch Vorteile bezüglich der Torsionskräfte. Die Stahlbänder 254 laufen nun außerhalb der Manschette einmal um. Hier ist nun der Abstand der Stahlbänder bezüglich der oben angegeben Dimensionierungen zu berücksichtigen.

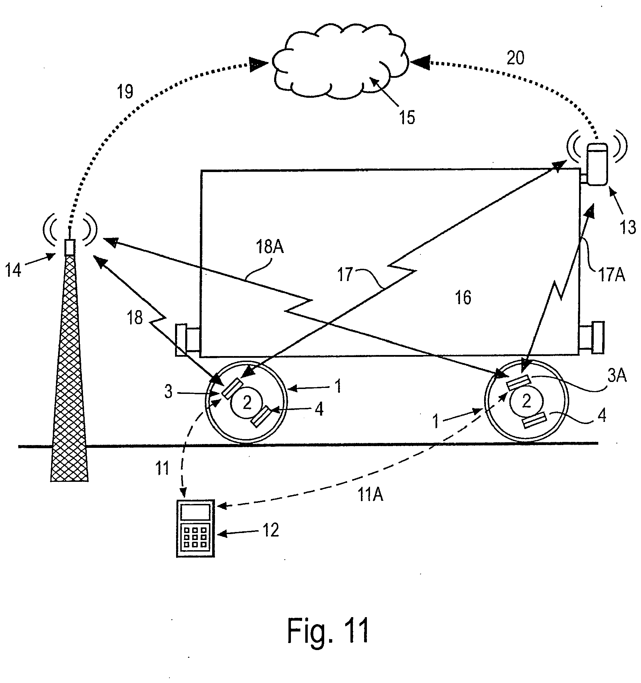

Fig. 11 zeigt eine schematisierte Seitenansicht eines Schienenfahrzeugs 16 (Waggon, Triebwagen etc.) mit einer erfindungsgemäßen Vorrichtung und optionaler Infrastruktur zur drahtlosen und drahtgebunden Signalübertragung und Überwachung des Schienenfahrzeugs 16. Das Schienenfahrzeug 16 weist an einer Welle 2 eine Vorrichtung 3 und ein Gegengewicht 4 auf. Hierzu kommen beide gezeigten Wellen 2 in Betracht. Die Vorrichtung 3 kann ausgestaltet sein, wie hierin beschrieben. Die von der Vorrichtung 3 erfassten und ggf. vorausgewerteten Daten können auf verschiedenen Wegen an die Zentrale 15 übermittelt werden. Eine mitfahrende Telematikeinheit 13 mit Funkkommunikationseinrichtungen kann am Schienenfahrzeug 16 angeordnet sein und die von der Vorrichtung 3 übertragenen Sensorsignale (bspw. Laufleistung und ggf. zusätzliche Informationen oder Ergebnisse einer Vorauswertung, insbesondere einen Fehlercode, Zeitpunkt einer Bewegungsaufnahme etc.) über die Funkstrecke 17 empfangen und über eine zweite Funkstrecke 20 an die Zentrale 15 übermitteln. Die Telematikeinheit 13 enthält vorteilhaft einen Microcontroller, ein Funkinterface, Speicher, Module für GPS, GSM, Bluetooth und/oder UMTS, eine Batterie und/oder einen Vibrationssensor, sowie ggf. zahlreiche weitere Sensoren. Weiter kann eine ortsfeste Funkkommunikationseinrichtung 14, die Sensorsignale über die Funkstrecke 18 empfangen und über eine zusätzliche kabellose, oder kabelgebundene Kommunikationsstrecke 19 an die Zentrale 15 übermitteln. Die Funkstrecke 18 kann auch gemäß gängiger Mobilfunkstandards (bspw. GSM oder UMTS) arbeiten. Die Daten können in der Zentrale 15 zentral erfasst und ausgewertet werden. Als weitere Option können die Daten über eine drahtlose oder kabelgebundene Kommunikationsverbindung 11 von einem mobilen Gerät 12 empfangen werden. Über die Kommunikationsstrecken 17, 18 und 11 können auch Parameter in der Vorrichtung 3 gesetzt und geändert werden. Obwohl stärkere Reflexionen am Schienenfahrzeug als bei niedrigeren Frequenzen auftreten können, kann die Funkstrecke 17 vorteilhaft einen hohen Frequenzbereich von 868 MHz oder 2.4 GHz nutzen. Dies hat sich auch im Hinblick auf eine komplexe Infrastruktur und komplexe Auslese- und Überwachungsszenarien zahlreicher Vorrichtungen 3 überraschend als zweckmäßig erwiesen. Die Verwendung einer niedrigeren, speziell für den Bahnbetrieb zugelassenen Funkfrequenz wäre hinsichtlich der Ausbreitungsbedingungen der Wellen im Güterwagenumfeld und möglicher Störungen durch öffentliche Nutzer vorteilhaft.

Gemäß einem vorteilhaften Aspekt der Erfindung ist nicht nur eine Vorrichtung 3 an einer Welle einer Fahrzeugachse des Schienenfahrzeugs 16, sondern sind mehrere separate Vorrichtungen 3, 3A etc. an jeder Welle bzw. Fahrzeugachse 2 vorgesehen. Gemäß diesem Aspekt der Erfindung sind die Vorrichtungen 3, 3A nicht nur dem Schienenfahrzeug 16, sondern eigentlich der entsprechenden Welle bzw. Fahrzeugachse 2 zugeordnet. Entsprechend kann die Telematikeinheit 13 mit beiden Vorrichtungen 3 und 3A kommunizieren. Zu Vorrichtung 3A besteht die Funkverbindung 17A. Auch das mobile Gerät 12 kann über die Funkstrecke 11A mit der Vorrichtung 3A in Kontakt treten. Dies gilt schließlich auch für die ortsfeste Funkkommunikationseinrichtung 14, die über die Funkstrecke 18A mit der zweiten Vorrichtung kommuniziert. Jede Vorrichtung 3 und 3A kann ausgestaltet sein, wie hierin beschrieben. Vorteilhaft kann bspw. die Telematikeinheit 13 nun zwischen den Vorrichtungen 3 und 3A differenzieren, und damit feststellen, welche Signale (Bewegungsaufnahme, Laufleistung, Geschwindigkeit, Drehrichtung, Blockade der Räder, Bremsaktivität etc.) von welcher Fahrzeugachse 2 stammen.

Die Laufleistung des Güterwaggons kann bspw. in der Telematikeinheit 13 aus dem Inkrement der einzelnen Laufleistungen abgeleitet werden. Die Überprüfung der Laufleistung und Fehlerhistorie der einzelnen Fahrzeugachsen 2 ist deshalb besonders vorteilhaft, weil die Fahrzeugachsen 2 einzeln ausgetauscht werden können. Daher können diese Fahrzeugachsen 2, vom Fahrzeug verschiedene Laufleistungen und Fehlerhistorien aufweisen. Im Hinblick auf die Sicherheit und Zuverlässigkeit des Schienenfahrzeugs sind diese Informationen von großer Bedeutung. Im Fehlerfall kann die Telematikeinheit 13 ein Alarmsignal über Funk an die Zentrale übermitteln. So können Fehler schnell entdeckt und ggf. auch behoben werden. Um die Zuordnung zu Fahrzeugachsen 2 und Schienenfahrzeugen 16 zu ermöglichen, kann eine Kodierung in der Vorrichtung vorgesehen sein. Diese kann eindeutig und unveränderlich sein.

Das mobile Gerät 12 kann ausgestaltet sein, um eine Vorrichtung 3, 3A auszulesen, sobald es sich dicht an der auszulesenden Vorrichtung 3, 3A befindet. Dazu kann der Reed Sensor 251 (vgl. Fig. 3) mittels eines Magneten angeregt und daraufhin die Vorrichtung, die ausgelesen werden soll, aktiviert werden.

Die Telematikeinheit 13 kann ausgestaltet sein, um die Position und bspw. die Geschwindigkeit oder auch Bewegungsrichtung des Schienenfahrzeugs mittels GPS zu überprüfen. Dies kann ab und zu erfolgen, um eine Plausibilitätsprüfung der von den Vorrichtungen 3, 3A gelieferten Daten vorzunehmen. Insbesondere um die von den Sensoren übermittelten Geschwindigkeitssignale mit der aktuellen GPS-Geschwindigkeit abzugleichen. Außerdem kann im Fehlerfall (bspw. Meldung: Räderblockade von einer Vorrichtung) ebenfalls geprüft werden, ob sich das Schienenfahrzeug wirklich nicht bewegt. Außerdem kann es ggf. geortet werden. Auch die Telematikeinheit 13 kann vorteilhaft über einen Vibrationssensor verfügen, der dafür sorgt, dass die Telematikeinheit 13 erst aktiviert wird, wenn sich das Schienenfahrzeug bewegt. Die autonome Laufzeit der Telematikeinheit beträgt vorteilhaft bis zu 6 oder 7 Jahren.

Mit einer Vorrichtung 3 oder 3A gemäß der vorliegenden Erfindung ist die Drehbewegungserkennung und Fahrgestelldiagnose mittels einer kompakten, einteiligen und abgeschlossenen Einheit möglich, die einfach nachgerüstet werden kann.

Die Telematikeinheit 13 kann die Vorrichtungen 3, 3A in regelmäßigen Zeitintervallen abfragen, anstatt auf Sendungen der Vorrichtungen zu warten. In einer anderen vorteilhaften Ausgestaltung können Telematikeinheit 13 und Vorrichtungen 3, 3A jeweils über Echtzeituhren verfügen und sich darüber synchronisieren. Dann können bestimmt Zeitpunkte für die Übertragung vorgesehen sein. Für den Fehlerfall (Blockade, Entgleisung) können auch Übertragungen außerhalb der definierten Zeitintervalle vorgesehen sein, z.B. nach dem gleichzeitigen Ansprechen der Vibrationssensoren 252 in den Vorrichtungen und in der Telematikeinheit 13 nach einer vorausgehenden Stillstandszeit.

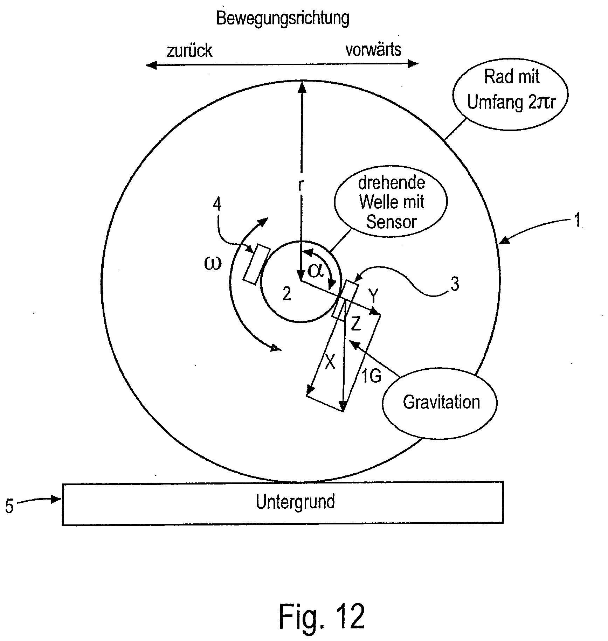

Fig. 12 zeigt eine vereinfachte Darstellung eines Ausschnitts eines Ausführungsbeispiels einer erfindungsgemäßen Vorrichtung. Dargestellt ist ein Rad 1, beispielsweise eines Schienenfahrzeugs (nicht dargestellt). Am Rad 1 ist eine Fahrzeugachse bzw. die Welle einer Fahrzeugachse 2 (im Weiteren häufig vereinfachend nur als Welle bezeichnet) angebracht, die in die Bildebene hineinragt, sodass lediglich ihre Querschnittfläche dargestellt ist. Die Welle 2 kann typischerweise zwei gleichartige Räder 1 des Schienenfahrzeugs verbinden. An der Welle 2 ist eine Einheit 3 angeordnet, die mindestens einen Bewegungssensor umfasst, der in wenigstens einer Achse (Richtung) eine statische Beschleunigung bestimmen kann. Auf der gegenüberliegenden Seite der Einheit 3 ist ein Gegengewicht 4 angeordnet, um Unwucht zu vermeiden. Das Rad 1 rollt bei einer Vorwärts- oder Rückwärtsbewegung des Schienenfahrzeugs über den Untergrund 5, der beispielsweise eine Schiene sein kann. Die axialen Richtungen, in denen der Beschleunigungssensor die Beschleunigung feststellen kann, sind durch eine X-, Y- und eine Z-Achse gekennzeichnet. Die X-, Y- und Z-Achse stehen jeweils senkrecht aufeinander. Außerdem ist die Richtung der Erdgravitation bzw. des Gravitationsfeldes/Erdbeschleunigung durch einen Pfeil 1G dargestellt. Die X-Achse zeigt in tangentiale Richtung bezüglich des Umfangs des Querschnitts der Welle 2, die Z-Achse in radiale Richtung vom Zentrum der Welle 2 aus gesehen und die Y-Achse in axiale Richtung der Welle 2, also aus der Bildebene heraus. In der Einheit 3 können neben dem Beschleunigungssensor noch ein Mikroprozessor, ein Speicher, insbesondere Halbleiterspeicher, und ein Funkmodul zur Übertragung von Daten vorgesehen sein. Insofern kann innerhalb der Einheit 3 bereits eine teilweise oder vollständige Vorverarbeitung der mit dem Beschleunigungssensor ermittelten Signale erfolgen. Anstelle eines Funkmoduls kann auch eine andere Schnittstelle vorgesehen sein, über die drahtlos oder drahtgebunden Daten aus der Einheit 3 ausgelesen werden können. Eine Drehrichtung der Fahrzeugachse bzw. Welle ist zusammen mit der Winkelgeschwindigkeit $\omega$ angegeben. Ebenso ist ein Drehwinkel α bezüglich der Erdbeschleunigung angegeben. Der Drehwinkel α der Welle 2 kann von dem Bewegungssensor erfasst werden. In der konkreten Anwendung können so die Drehzahl, der Drehwinkel, und/oder die Neigung der Welle 2, eventuell auftretende Unregelmäßigkeiten an der rotierenden Anordnung, Unregelmäßigkeiten am Untergrund und Stöße durch andere Objekte erfasst werden. Auf Basis der Sensorsignale können dann u.a. die zurückgelegte Strecke (Laufleistung), Stillstand, Blockade der Räder, Geschwindigkeit, abnormale Betriebszustände (Verschleiß, Entgleisung), Gleisschäden, Rangierstöße und Betriebsdauer ermittelt werden. Unter anderem misst der Beschleunigungssensor die auf die Achse und auf den Sensor wirkende Erdbeschleunigung. Eine sich im Gravitationsfeld der Erde drehende Achse bzw. Welle 2 erzeugt, soweit sie nicht im 90° Winkel zur Erdoberfläche steht, abhängig vom sich verändernden Drehwinkel der Welle 2 ein periodisches Signal des X- und Z-Achsen-Sensors. Die Frequenz des Signals entspricht der Drehzahl der Achse. Im Zentrum der vorliegenden Erfindung stehen die Auswertung des zeitlichen Verlaufs der Sensorsignale zur Bestimmung der Laufleistung oder der Fahrgeschwindigkeit und die Detektion spezifischer Störungen durch eine automatisierte Auswertung.

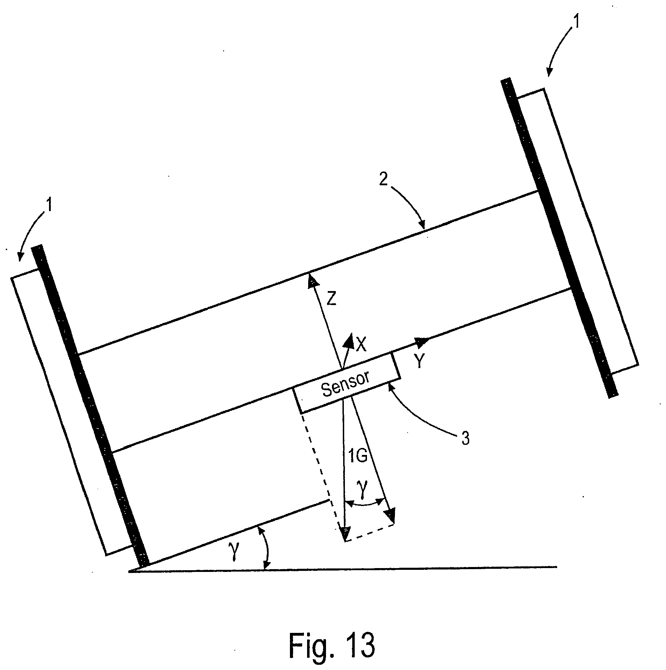

Fig. 13 zeigt eine weitere vereinfachte Darstellung des Ausführungsbeispiels gemäß Fig. 12. Dargestellt sind die Räder 1 und eine Welle 2 eines Schienenfahrzeugs, auf der eine erfindungsgemäße Vorrichtung gemäß einem Ausführungsbeispiel der Erfindung angeordnet ist. Zu sehen ist insbesondere die Einheit 3, die, wie zuvor ausgeführt, neben dem Beschleunigungssensor auch weitere elektronische Komponenten zur Vorverarbeitung und Übertragung der Daten beinhalten kann. Anhand der Fig. ergibt sich nochmals die Lage der axialen Achsen, in denen der Beschleunigungssensor die Beschleunigung bestimmen kann. Die Y-Achse zeigt in axiale Richtung der Welle 2. Sie ermöglicht eine Bestimmung der Neigung der Welle 2 gegenüber der Horizontalen. Die X-Achse zeigt in radiale Richtung der Welle, also in oder entgegen der Drehrichtung der Welle. Die Z-Achse erstreckt sich in radialer Richtung. Der Neigungswinkel beträgt γ. Eine erfindungsgemäße Auswerteinheit kann also eingerichtet sein, auch die Neigung des Schienenfahrzeugs zu bestimmen.

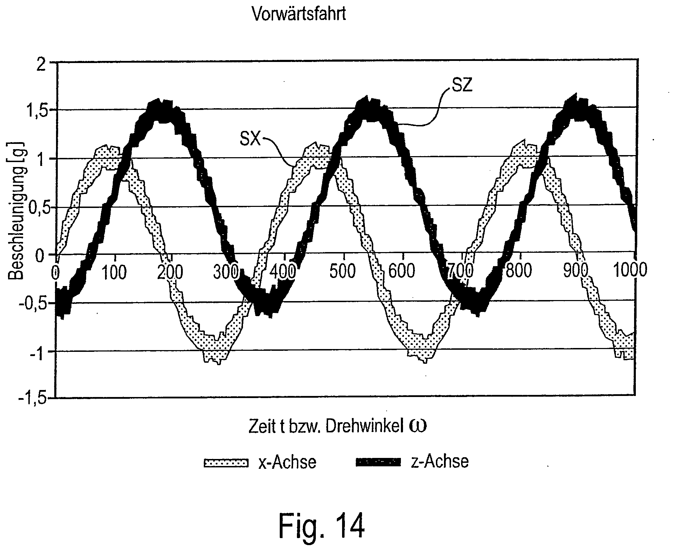

Die Fig. 14 bis 20 zeigen Sensorsignale SX und SZ für die axialen Richtungen X und Z, wie sie bei einer Vorrichtung 3 gemäß Aspekten der Erfindung auftreten und an die Auswerteinheit bzw. einen Mikrocontroller weitergeleitet werden können. Auf Basis der Eingangssignale kann die Auswerteinheit 23 oder auch die Einheiten 13, 14 oder 15 gemäß Fig. 11 bestimmte Ausgangssignale bzw. Messergebnisse bereitstellen. Hierzu sind die Auswerteinheit 23 oder auch die Einheiten 13, 14 oder 15 eingerichtet, um den zeitlichen Verlauf der Sensorsignale SX, SZ (oder auch eines dritten Signals SY entlang einer dritten Achse bezüglich der Neigung der Fahrzeugachse, Welle 2) auszuwerten und daraus Laufleistung und/oder Geschwindigkeit zu berechnen und ggf. Fehlersignale zu detektieren.

Fig. 14 zeigt ein Diagramm eines Ausschnitts mit beispielhaften zeitlichen Verläufen zweier Signale SX, SZ eines Beschleunigungssensors einer Vorrichtung 3 (wie zuvor beschrieben) bei kontinuierlicher Vorwärtsfahrt des Fahrzeugs. Dargestellt ist der zeitliche bzw. auf den Drehwinkel ω bezogene Verlauf von Ausgangssignalen SX, SZ eines Beschleunigungssensors, der mit der Fahrzeugachse 2 eines Schienenfahrzeugs gemäß der Erfindung gekoppelt sein kann. Fig. 14 betrifft eine kontinuierliche Vorwärtsfahrt und gibt die der X-Achse (SX) und der Z-Achse (SZ) zugeordneten Ausgangssignale SX, SZ wieder. Diese sind periodische Sinussignale, die mit geringen Störungen überlagert sind. Das der Z-Achse entsprechende Signal SZ weist gegenüber dem der X-Achse zugeordneten Signal SX einen geschwindigkeitsabhängigen Offset (Versatz), hier beispielhaft etwa 0,5 g (g ist die Erdbeschleunigung), auf. Die Richtung der Drehbewegung lässt sich der Phasenverschiebung des der X-Achse zugeordneten Signals SX gegenüber dem der Z-Achse zugeordneten Signal SZ entnehmen. Im vorliegenden Fall ist eine Vorwärtsfahrt dargestellt.

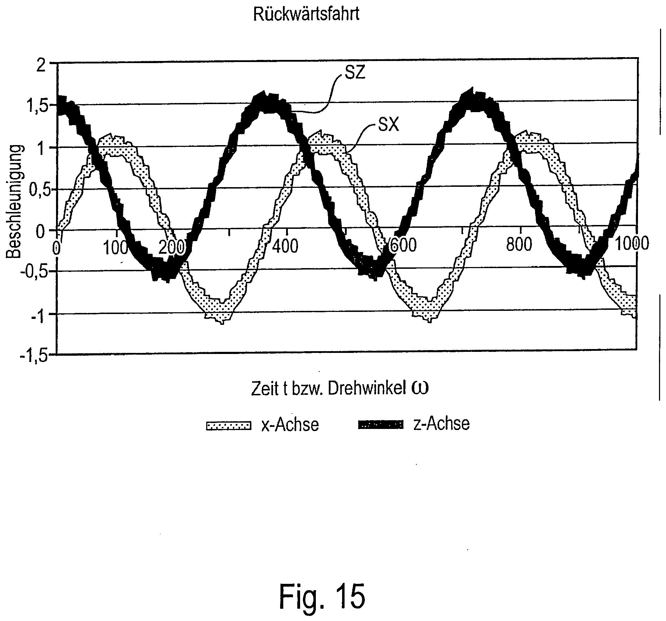

Fig. 15 zeigt die Signale gemäß Fig. 14, wobei Fig. 15 nun eine Rückwärtsfahrt betrifft. Entsprechend eilt das der Z-Achse zugeordnete Signal SZ dem Signal SX der X-Achse voraus. Bei gleicher Geschwindigkeit des Schienenfahrzeugs bleibt die Periode bzw. Frequenz der Signale jedoch konstant. Aus den Maxima der Signale kann daher die Geschwindigkeit und aus dem zeitlichen Gesamtverlauf der Signale (oder sogar nur eines der Signale) in einer elektronischen Auswertung die absolvierte Laufleistung bestimmt werden.

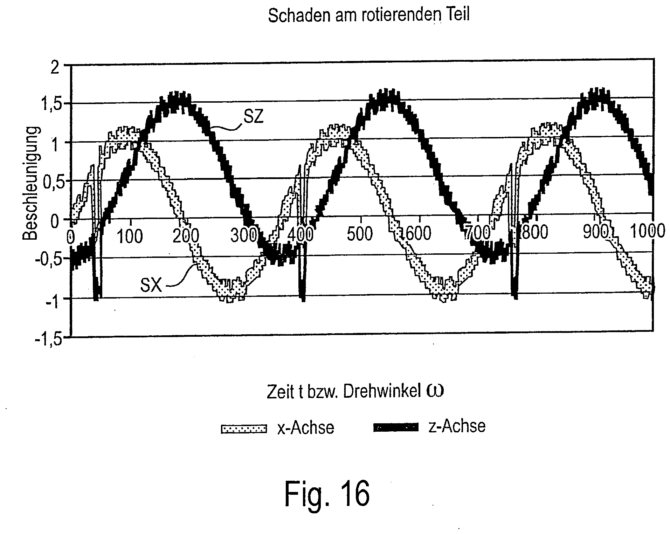

Fig. 16 zeigt wiederum eine der Fig. 14 entsprechende Darstellung, wobei ein Schaden an einem rotierenden Teil vorliegt, so dass in periodischen Abständen Peaks anteilig in beiden Signalen SX, SZ auftreten. Derartige Peaks (Störspitzen o.ä.) können im Rahmen einer Auswertung ermittelt werden, die auf die Erkennung dieser Störung eingerichtet ist. Die Periodizität gibt darüber Aufschluss, dass der Schaden an einem rotierenden Teil, z.B. Flachstellen, oder Fehler am Lager oder Laufflächen vorliegen. Außerdem kann aus den Sensorsignalen SX, SZ auf die genaue Position des Schadens geschlossen werden. Die Auswerteeinheit (bspw. Einheit 23 oder auch eine der Einheiten 12, 13, 14, oder 15) kann eingerichtet sein, um aus den Sensorsignalen SX, SZ die konkrete Position des Schadens am Rad abzuleiten. Aus der vektoriellen Resultierenden der Beschleunigungswerte SX und SZ kann insbesondere die Richtung von Stößen bzw. Beschleunigungswerten ermittelt werden. Daher kann mittels einer erfindungsgemäßen Vorrichtung auch zwischen vertikalen und horizontalen Stößen unterschieden werden. Unter Berücksichtigung der Richtung der resultierenden Beschleunigungswerte lassen sich unterschiedliche Signal- bzw. Fehlertypen (Lagerschäden, Rangierstöße, Beladung etc.) differenzieren, wie nachfolgend noch weiter ausgeführt.

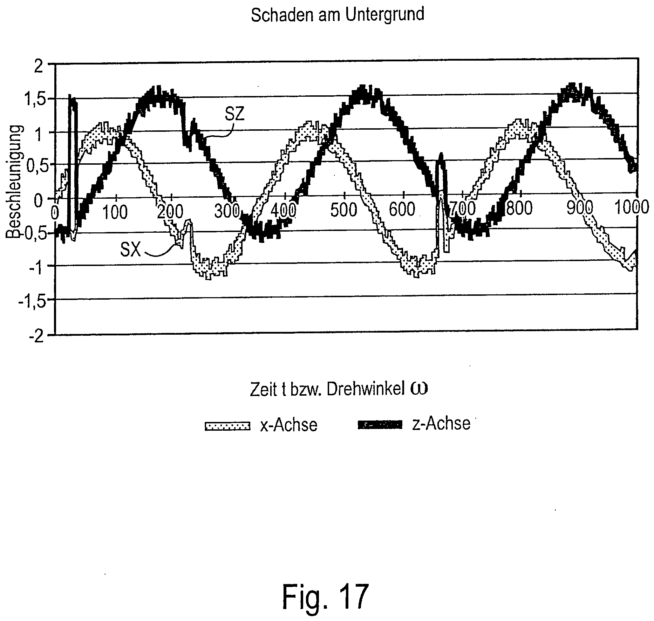

Fig. 17 zeigt wieder die Signale SX, SZ gemäß Fig. 14, wobei nun ein Schaden am Untergrund, wie z.B. an der Schiene, vorliegt. Hierbei treten in beiden Achsen anteilig Beschleunigungswerte (Ausreißer, Störspitzen etc.) in vertikaler Richtung singulär auf. Eine automatische Auswertung kann also so eingerichtet sein, dass singuläre Störspitzen oder Ausreißer in vertikaler Richtung als Untergrundschaden bewertet und ausgegeben werden.

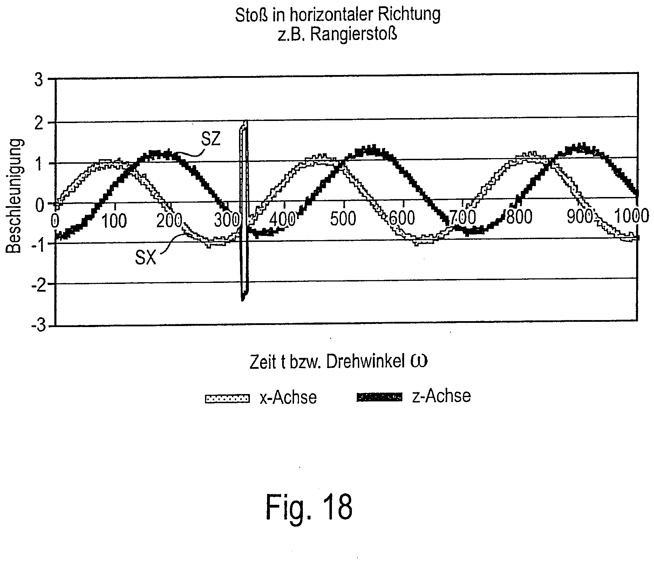

Fig. 18 zeigt die Signale SX, SZ gemäß Fig. 14, bei einem Stoß in Längsrichtung, z.B. beim Rangieren. Hierbei treten in beiden Achsen anteilig Beschleunigungswerte (Ausreißer, Störspitzen etc.) in horizontaler Richtung singulär auf. Eine automatische Auswertung kann also so eingerichtet sein, dass die Störspitzen der Signale als Längs- oder Rangierstoß erkannt werden. Insbesondere können Stöße über 2.4 g in horizontaler Richtung detektiert werden und als Fehler ggf. mit Zeitpunkt ausgegeben werden.

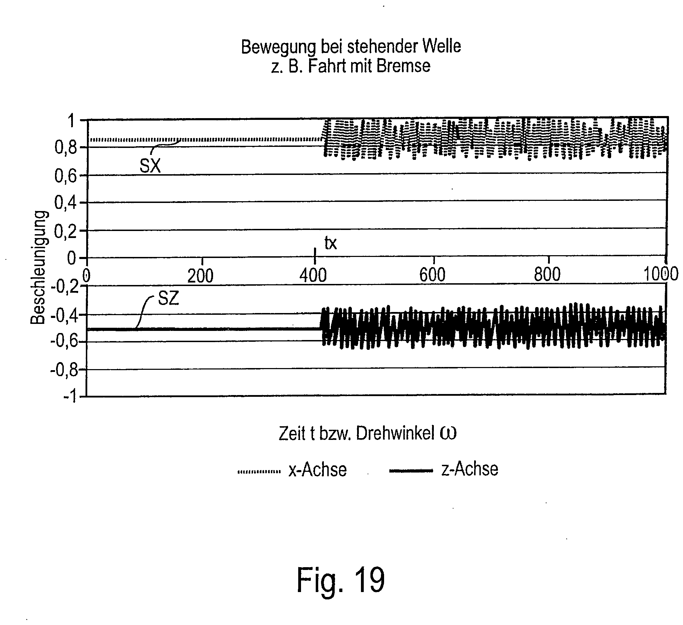

Fig. 19 betrifft einen Fall, bei dem das Schienenfahrzeug ab einem Zeitpunkt tx bewegt wird, die Räder aber blockiert sind. Die Ausgangssignale SX, SZ zeigen ab dem Zeitpunkt tx nichtperiodische Beschleunigungswerte (erhöhtes Rauschen durch Erschütterungen), ohne dass währenddessen ein periodisches Signal (d.h. dass sich die Achse dreht) gemessen wird. Das Auftreten von erhöhtem Rauschen bei gleichzeitigem Ausbleiben des periodischen drehwinkelabhängigen sinusförmigen Signals kann also als ein Blockieren der Räder erkannt werden. Die Auswertung kann diese Signale dann bspw. mit dem Zeitpunkt des Auftretens und der Dauer des Auftretens abspeichern.

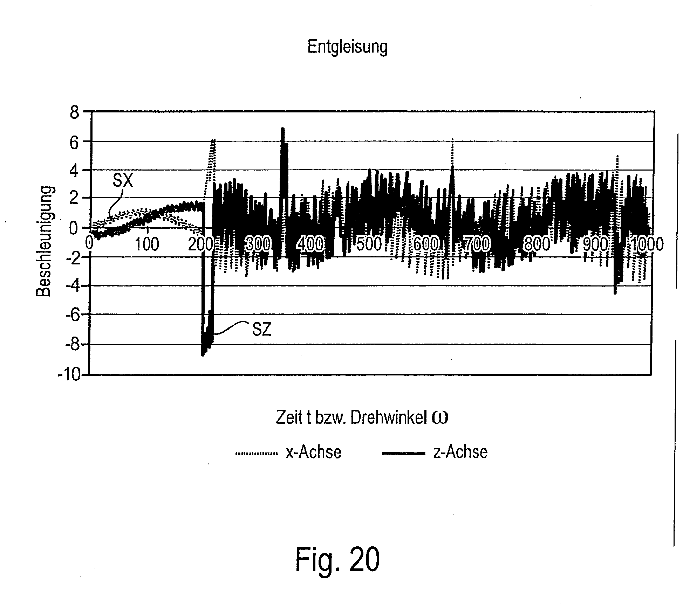

Fig. 20 zeigt schließlich den möglichen Verlauf von Beschleunigungssignalen SX, SZ bei einer Entgleisung oder einem permanenten Verlust des Rad-Schienen-Kontaktes. Hierbei wird eine kontinuierliche Überlagerung des Sinussignals mit Störgrößen in allen Achsen teilweise mit periodisch wiederkehrender Signatur in vertikaler Richtung mit konstantem zeitlichen Abstand festgestellt. Eine automatische Erkennung dieser Signale wäre also anhand der genannten Merkmale möglich und könnte in einer entsprechend eingerichteten Auswerteeinheit erkannt werden. Gegebenenfalls könnte ein Alarmsignal ausgelöst werden oder zumindest der Zeitpunkt festgehalten werden.

Gemäß einem weiteren Aspekt der vorliegenden Erfindung kann die Drehzahl der Fahrzeugachse 2 auch anhand der Fliehkraft, also der in radialer Richtung (Z-Achse) gemessenen Beschleunigung bestimmt oder verifiziert werden. Bei dieser Komponente handelt es sich um ein Gleichsignal, soweit die Geschwindigkeit konstant bleibt. Eine erfindungsgemäße Auswerteeinheit ist dann so ausgestaltet, dass sie den Abgleich mit diesem Signal durchführt.

Gemäß einer spezifischen Ausgestaltung der Erfindung können den Fehlern oder Zuständen bestimmte spezifische einfache Fehlercodes zugeordnet werden. Vorteilhaft ist beispielsweise die folgende Kodierung:

Tabelle 1

| Code | Beschreibung |
|---|---|
| 0x01 NN NN NN NN | Blockade |
| 0x02 NN NN NN NN | Entgleisung |
| 0x03 NN NN NN NN | Horizontaler Stoß > 2.4 g |
| 0x04 NN NN NN NN | Schaden am rotierenden Teil |
| 0x05 NN NN NN NN | Schaden am Untergrund |
| 0xF1 NN NN NN NN | Laufleistung (km-Stand) |
| 0xF2 NN NN NN NN | Geschwindigkeit |
| 0xF3 NN NN NN NN | Heißläufer |
| 0xF4 NN NN NN NN | Fehlerhafte Bremswirkung |
| 0xF5 NN NN NN NN | Bremse angezogen |
| 0xF6 NN NN NN NN | Beladung/Masse |

Die Codes können einfache nummerische Kodierungen des Fehlerzustandes sein. Zur Übertragung kann eine Präambel mit spezifischen Daten (bspw. ID) der Vorrichtung und Verschlüsselungsparametern vorangestellt werden. 'NN NN NN NN' sind 4 Byte Nutzdaten. Diese können neben dem Kilometerstand oder dem indizierten Nutzwert auch einen Zeitstempel der Echtzeituhr beinhalten. Tabelle 1 veranschaulicht einige vorteilhafte Beispiele ohne Anspruch auf Vollständigkeit. Der Zeitstempel kann vorteilhaft zur Bestimmung der Wagenreihung verwendet werden. Die Zustände können die Betätigung der Bremse betreffen, die bspw. auf Auswertung von Signalen des Körperschallsensors beruht. Ebenso können Signale eines Temperatursensors zur Detektion eines Heißläufers ermittelt werden. Stöße können durch die Beschleunigungssensoren ermittelt werden. Einige Zustände oder Fehler werden aus Kombinationen von Sensorsignalen ermittelt. Bspw. die Beschleunigung oder Geschwindigkeitsänderung bezüglich einer Bremsbetätigung, also Körperschall. Ebenso kann dies für den Temperatursensor gelten.

Gemäß Aspekten der vorliegenden Erfindung wird also an der Fahrzeugachse oder Welle eines Fahrzeuges, insbesondere Schienenfahrzeugs Ein-, Zwei- oder Dreiachs-Beschleunigungssensor angebracht, der die auftretenden Beschleunigungswerte in Richtung der X-, Y- und Z-Achse misst. Der Beschleunigungssensor wird fest mit der Achse verbunden und rotiert mit der Achse um den Achsenmittelpunkt. Unter anderem misst der Beschleunigungssensor die auf die Achse und auf den Sensor wirkende Erdbeschleunigung. Eine sich im Gravitationsfeld der Erde drehende Achse erzeugt, soweit sie nicht im 90 °-Winkel zur Erdoberfläche steht, abhängig vom sich verändernden Drehwinkel der Achse, ein periodisches Signal des X- und Z-Achsen-Sensors. Die Frequenz des Signals entspricht der Drehzahl der Achse. Gleichzeitig kann mindestens ein Fehlersignal detektiert werden. Diese Signale können auf eine Fahrzeugachse eines Schienenfahrzeugs bezogen werden.

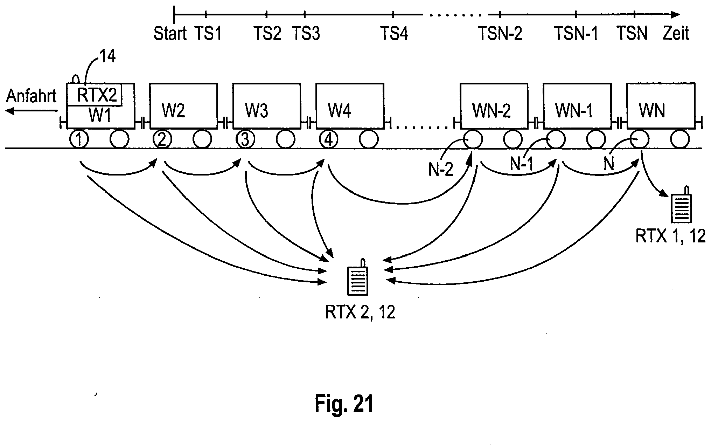

Fig. 21 illustriert ein Ausführungsbeispiel der Erfindung bezüglich der Zugkomposition und Wagenreihung.

Ein Schienenfahrzeug ist hier ein Zug mit N Wagen. Der erste Wagen W1 kann eine Lok oder wie hier dargestellt ein einfacher Wagen sein. Der Zug mit den Wagen W1, W2, W3, W4, ... WN-1, WN-1, WN setzt sich zum Zeitpunkt 0 nach links in Bewegung. Der Wagen W1 beginnt sich zum Zeitpunkt TS1 (Zeitstempel TS1) in Bewegung zu setzen. Der Wagen W2 beginnt mit der Bewegung erst zum Zeitpunkt TS2, da zwischen W2 und W1 eine Kupplung mit etwas Spiel oder einer Federung vorgesehen ist. Dadurch wird eine Verzögerung ΔT=TS2-TS1 zwischen den Anfahrzeitpunkten der Wagen verursacht. Der dritte Wagen W3 startet entsprechend erst zum Zeitpunkt TS3, der vierte Wagen W4 zum Zeitpunkt TS4, der N-2-te Wage WN-2 erst zum Zeitpunkt TSN-2, der N-1-te Wagen WN-1 zum Zeitpunkt TSN-1 und der letzte Wagen WN zum Zeitpunkt TSN. Die zeitlichen Verzögerungen zwischen jeweils benachbarten Wagen müssen nicht paarweise gleich lang sein. Trotzdem gilt immer die Bedingung $TS_i < TS_j$ für $i<j$, wobei $i,j$ natürliche Zahlen sind. Dadurch lässt sich die Reihenfolge der Wagen ermitteln, da aus der Sicht des ersten sich bewegenden Wagens Wi immer gilt: $POS_i < POS_j$, für $i<j$, mit $i,j$ wie zuvor definiert. Eine kleineres $i, j$ bedeutet dann eine Position näher zur Spitze des Zuges an der sich der Triebwagen befindet. Bei einer reinen Schubbewegung sind die Zusammenhänge natürlich genau umgekehrt.

Die Bewegungsdetektion erfolgt unter Einsatz einer Vorrichtung 3, die an einer Welle 2 der Wagen W1 bis WN in der zuvor geschilderten Weise befestigt ist. Die Wagen W1 bis WN können an jeder Welle 2 ihrer Fahrzeugachsen oder nur an einer Welle 2 eine Vorrichtung 3 aufweisen. Dies ist durch die Nummerierung 1 bis N auf den Rädern angedeutet. Die Vorrichtung 3 kann vorteilhaft einen Dreh- bzw. Bewegungssensor gemäß vorstehender Aspekte und Ausführungsbeispiele, insbesondere einen Beschleunigungssensor aufweisen.

Gemäß diesem Aspekt der Erfindung kann allgemein die folgende Beziehung verwendet werden:

$$POSX = F\ (TSX),$$

wobei POSX die relative Position eines Schienenfahrzeugs (d.h. eines Wagens innerhalb eines Zuges) ist und TSX die relative oder absolute Anfahrzeit des Schienenfahrzeugs (d.h. des Wagens X innerhalb des Zuges) ist.

Vorteilhaft fließt in die Funktion eine Identifikationssignatur IDX des Wagens X ein, wodurch sich die folgende Beziehung ergibt:

$$POSX = F\ (TSX, IDX).$$

Diese ID kann in der Vorrichtung 3 gespeichert sein. Es kann sich in einem Ausführungsbeispiel um die Identifikationsnummer IDWX einer Welle handeln, was folgendermaßen ausgedrückt werden kann:

$$POSX = F\ (TSX, IDWX).$$

Damit kann diese ID auch zur Identifizierung des Wagens herangezogen werden. Es kann sich dann um eine eindeutige und nur einmalig vergebene Nummer handeln, die einer einzigen Welle zugewiesen ist. In einem anderen Ausführungsbeispiel können Identifikationsnummern IDX an Wagen vergeben werden, die dann ebenfalls in der Vorrichtung in der Welle gespeichert sein können. Es kann sich dann vorteilhaft um einen Festwertspeicher handeln, der die Nummer speichert. Die Werte IDX oder auch IDWX können vorteilhaft gegen unzulässige nachträgliche Manipulation geschützt sein.

Gemäß einem Aspekt der Erfindung können die Vorrichtungen 3 an den Wellen 1 bis N der Wagen W1 bis WN auch miteinander kommunizieren bzw. zumindest Daten von einer zur nächsten Vorrichtung senden. Dies kann vorzugsweise dadurch geschehen, dass die Vorrichtungen 3 ausgestaltet sind, um ein Ad-hoc Netzwerk aufzubauen. Dieses Netzwerk kann sich bei Zusammenstellung von Schienenfahrzeugen, insbesondere von Zügen mit mehreren Wagen, spontan selbst konfigurieren. Es kann vorteilhaft Daten von einer Vorrichtung 3 an einer Welle eines Wagens zu einer benachbarten oder wenigstens räumlich nahegelegenen Vorrichtung 3 an der Welle eines anderen Wagens senden. Dadurch können große Distanzen überbrückt werden, die andernfalls nur durch Erhöhen der Sendeleistung einer einzelnen Vorrichtung überwunden werden könnten. Dadurch kann Leistung eingespart werden. Die Vorrichtung 3 kann dazu die erforderlichen Protokolle zur Authentifizierung und Autorisierung innerhalb eines sich bildenden Netzwerkes bereitstellen. Zusätzlich ist die Vorrichtung vorteilhaft eingerichtet, um zu den herkömmlichen Netzwerkeigenschaften auch noch die für Schienenfahrzeuge zusätzlich erforderlichen Parameter bereitzustellen. Hierzu können beispielsweise Daten in die Vorrichtung eingegeben werden, die die Zugehörigkeit zu einem Zug definieren. Es können auch Parameter eingegeben werden, die einen Wagen eines Zuges betreffen. Diese können mit einer oder mehreren IDs des Wagens oder der Wellen von Wagen verknüpft und permanent gespeichert werden. Eine Vorrichtung 3 kann eine eindeutige einmalige ID aufweisen, die mit der Welle 2 eines Schienenfahrzeugs verknüpft wird. Dadurch können Eigenschaften der Welle 2 überwacht und Untersuchungen zu Grunde gelegt werden. Eine Manipulation ist nur möglich, wenn die Vorrichtung entfernt wird, was wiederum durch Verplombung mit der Welle der Fahrzeugsachse, wie oben beschrieben verhindert werden kann.

Der Austausch von Daten kann wie weiter oben bereits bezüglich Fig. 11 beschrieben drahtlos mit unterschiedlichen weiteren Vorrichtungen 12, 14 erfolgen. Diese können als Telematikeinheit 14 oder auch Telematikeinheiten 14 an jedem Wagen oder in außerhalb des Zuges als Handgeräte 12 oder auch feste Geräte 12 vorgesehen sein. Die Vorrichtungen 12, 14 können dann einen Teil der Auswertung der Signale übernehmen oder die fertigen Daten von den Vorrichtungen 2 empfangen. Die Vorrichtungen 3, 12, 14 können sich in eine Infrastruktur eingliedern, wie sie bezügliche Fig. 11 beschrieben wurde. Insbesondere können dann auch die Wagenreihungsinformationen innerhalb der Infrastruktur vorteilhaft verwertet werden.

Gemäß einem weiteren Ausführungsbeispiel der Erfindung ist eine Vorrichtung 3 weiterhin ausgestaltet, um die Eigenresonanzfrequenz einer Welle 2 zu bestimmen. Insbesondere kann diese Körperschallsensoren oder andere akustische Sensoren umfassen, um eine Verschiebung einer Eigenresonanzfrequenz der Welle 2 zu detektieren. Hierbei wird vorzugsweise die durch den Betrieb verursachte Anregung der Welle 2 dazu eingesetzt, die Verschiebung der Eigenresonanzfrequenz zu bestimmen. Die Vorrichtung 3 kann insbesondere ausgestaltet sein, um die Verschiebung der Eigenresonanzfrequenz im Hinblick auf mögliche Fehler oder Gefahren zu analysieren. Hier kann die Vorrichtung 3 eine Auswerteeinheit umfassen, die auf Basis der Verschiebung der Eigenresonanzfrequenz eine fehlerhafte Welle 2, insbesondere eine Rissbildung der Welle 2 detektiert. Insbesondere kann eine derartige Detektion von Fehlern an jeder Welle eines Schienenfahrzeugs erfolgen. Die Auswertung kann über die Telematik- und Funkeinheiten kommuniziert oder innerhalb der Vorrichtungen abgespeichert werden. Entsprechend können Alarmsignale bei Überschreiten von Schwellwerten ausgelöst werden.

Die erfindungsgemäße Vorrichtung 3 kann weiterhin ausgestaltet sein, um eine Schadensanalyse mittels Auswertung der Modulation der Eigenfrequenz der Welle 2 mit der Rotationsfrequenz der Welle 2 auszuführen. Vorteilhaft ist keine Fremdanregung der Schwingungen erforderlich. Stattdessen erfolgt die Auswertung im laufenden Betrieb. Die Anregung erfolgt dann zum Beispiel durch Unebenheiten auf den Laufflächen und/oder den Schienen. Weiterhin können Anregungen beim Be- und Entladen, beim Rangieren, durch Überfahren von Unebenheiten und/oder von Weichen ausgelöst werden und diese innerhalb der erfindungsgemäßen Vorrichtung 3 automatisch auf eine Verschiebung der Eigenfrequenz analysiert werden. Wenn die Vorrichtung 3 Beschleunigungssensoren oder Körperschallmikrofone aufweist, können diese ausgestaltet sein, um derartige Eigenschwingungen aufzunehmen. Die Analyse der Schwingung kann direkt in der Vorrichtung 3 erfolgen, wobei dort eine Verschiebung der Eigenfrequenz detektiert werden kann. Eine Abweichung von einem Sollwert der Eigenfrequenz kann unter Angabe der Identifikation der Vorrichtung 3 bzw. der Welle 2 bzw. des Radsatzes oder des Wagens über Funkkommunikation an eine Zentrale gemeldet oder innerhalb der Vorrichtung abgespeichert werden. Es hat sich gezeigt, dass Schäden, zum Beispiel entstehende an der Welle 2, das Spektrum der Eigenfrequenz der Welle 2 verändern können. Durch Vergleich mit einem Sollspektrum kann damit frühzeitig vor sich anbahnenden weiteren Schäden und daraus resultierenden Gefahren gewarnt werden.

Weiterhin unterliegt die Welle 2 im Allgemeinen einer Biegebelastung. Diese entsteht insbesondere durch versetzte Angriffspunkte der durch die Welle 2 zu tragenden Last, aber auch durch das Eigengewicht der Welle 2 selbst. Es hat sich gezeigt, dass die Biegebelastung der Welle 2 die Eigenfrequenz der Welle 2 verändert. In einer Vorrichtung 3 gemäß diesem Ausführungsbeispiel der Erfindung kann dieser Effekt ausgenutzt werden, um beispielsweise das Gewicht der aktuellen Zuladung eines Schienenfahrzeugs bzw. eines Güterwagens zu ermitteln. Je größer das Gewicht der Zuladung ist, desto größer ist die Biegebelastung in der Welle 2 und somit die Verschiebung der Eigenfrequenz. Dies gilt insbesondere für eine unbeschädigte Welle. Bei einer schadhaften Welle (zum Beispiel Rissbildung) kann neben der Verschiebung der Eigenfrequenz eine Veränderung des Eigenfrequenzspektrums festgestellt werden. So wird beispielsweise bei einer rotierenden Welle 2 das Eigenfrequenzspektrum der Welle 2 mit der Rotationsfrequenz der Welle 2 moduliert. Die erfindungsgemäße Vorrichtung 3 gemäß diesem Ausführungsbeispiel kann insbesondere vorteilhaft ausgestaltet sein, um diese Modulation des Eigenfrequenzspektrums zu detektieren und zur Feststellung eines Fehlers an der Welle ausgenutzt werden (zum Beispiel Rissbildung).

**Patentansprüche**

1. Vorrichtung zur Überwachung eines Schienenfahrzeugs mit Rädern (1), umfassend: Einen Beschleunigungssensor (21), der geeignet ist, eine statische Beschleunigung entlang mindestens einer ersten Achse oder Welle (2) einer Fahrzeugachse des Schienenfahrzeugs zu bestimmen, und eine Auswerteeinheit (23), die eingerichtet ist, um ein Ausgangssignal des Beschleunigungssensors (21) zu empfangen, das die gemessene Beschleunigung repräsentiert, und basierend auf diesem Ausgangssignal eine Laufleistung zu bestimmen, **dadurch gekennzeichnet, dass** der Beschleunigungssensor (21) auf einem in Reaktion auf eine Fahrbewegung des Schienenfahrzeugs proportional zur Fahrzeuggeschwindigkeit rotierenden Körper derart angeordnet ist, dass sich der Beschleunigungssensor (21) derart bewegt, dass sich der der Erdbeschleunigung zuzuordnende Anteil der gemessenen statischen Beschleunigung aufgrund einer Winkeländerung der mindestens einen ersten Achse oder Welle (2) gegenüber dem Gravitationsfeld der Erde ändert, und dass die Auswerteeinheit (23) dazu eingerichtet ist, basierend auf dem Ausgangssignal mindestens einen Fehlerzustand des Schienenfahrzeugs zu bestimmen.

2. Vorrichtung nach Anspruch 1, wobei der Beschleunigungssensor (21) an einem Außenumfang einer mit einem der Räder (1) gekoppelten Achse oder Welle (2) einer Fahrzeugachse des Schienenfahrzeugs angeordnet ist.

3. Vorrichtung nach einem der Ansprüche 1 oder 2, wobei die Vorrichtung (3) einen Sensor beinhaltet, der geeignet ist, eine Eigenschwingung der Achse oder Welle (2) der Fahrzeugachse des Schienenfahrzeugs zu detektieren.

4. Vorrichtung nach Anspruch 3, wobei die Vorrichtung (3) weiter ausgestaltet ist, um die detektierte Eigenschwingung bezüglich einer Abweichung von einem Sollwert zu analysieren und so auf eine Beschädigung einer Achse oder Welle (2) oder der Belastung einer Achse oder Welle (2) der Fahrzeugachse des Schienenfahrzeugs zurückzuschließen.

5. Vorrichtung nach einem der vorhergehenden Ansprüche, wobei die Vorrichtung (3) kraftschlüssig mit der Achse oder Welle (2) koppelbar ist, derart, dass keine Verschiebung gegenüber der Achse oder Welle (2) im Betrieb des Schienenfahrzeugs auftritt und/oder bei einer Rotation der Achse oder Welle (2) mit der Rotationsbewegung der Achse oder Welle (2) mitführbar ist.

6. Vorrichtung nach einem der vorhergehenden Ansprüche, wobei die Vorrichtung (3) mittels eines (oder mehrerer) um die Achse oder Welle (2) geschlungenen Befestigungsbandes, insbesondere eines Stahlbandes, an der Achse oder Welle (2) befestigbar ist.

7. Vorrichtung nach Anspruch 6, wobei eine der Achse oder Welle (2) zugewandte Seite der Vorrichtung (3) und/oder des Befestigungsbandes Noppen aufweist/aufweisen oder nach Art eines Reifenprofils ausgestaltet ist/sind und/oder wobei zwischen der Achse oder Welle (2) und dem Befestigungsband eine Schicht eines Kunststoffmaterials oder Polymers eingezogen ist.

8. Vorrichtung nach Anspruch 7, wobei die Noppen oder das Reifenprofil derart ausgestaltet ist/sind, dass ein Ablaufen von Flüssigkeit von der Achse oder Welle (2) begünstigt wird.

9. Vorrichtung nach einem der vorhergehenden Ansprüche, wobei die Vorrichtung (3) mit der Achse oder Welle (2) koppelbar ist, derart, dass keine Kerbwirkung an der Achse oder Welle (2) auftritt.

10. Vorrichtung nach Anspruch 9, wobei auf der der Achse oder Welle (2) eine Lackschicht angebracht ist und/oder wobei die Vorrichtung (3) oder das Befestigungsband ein Material aufweist, das weicher als eine Lackschicht auf der Achse oder Welle (2) und/oder als ein Stahl der Achse oder Welle (2) ist.

11. Vorrichtung nach einem der vorhergehenden Ansprüche, wobei die Vorrichtung (3) in axialer Richtung seitlich zum Rand des Schienenfahrzeugs auf der Achse oder Welle (2) verschoben angeordnet werden kann.

12. Vorrichtung nach einem der vorhergehenden Ansprüche, wobei die Vorrichtung (3) eine Elektronik, Ortsfilter, Brems- und/oder Temperatursensoren, Infrarot- und/oder Abstandsensoren, einen Bewegungssensor, Vibrationssensor, Beschleunigungssensor und/oder eine Auswerteelektronik umfasst.

13. Vorrichtung nach einem der vorhergehenden Ansprüche, wobei die Vorrichtung (3) derart ausgestaltet sein, dass möglichst geringe Torsionskräfte auf die Vorrichtung (3) erzeugbar sind.

14. Vorrichtung nach Anspruch 13, wobei die Vorrichtung (3) eine möglichst geringe Erstreckung in Richtung der Achse oder Welle (2), insbesondere entlang der zentralen Achse der Welle (2), aufweist.

15. Vorrichtung nach einem der Ansprüche 13 oder 14, wobei die Vorrichtung (3) ein Verhältnis von Höhe (H) zu Breite (B) der Vorrichtung (3) von nicht kleiner als 1:2 aufweist und im Einsatz in radialer Richtung maximal nur halb so weit von der Achse oder Welle (2) absteht, wie sich die Vorrichtung (3) in axialer Richtung der Achse oder Welle (2) erstreckt.

16. Vorrichtung nach einem der Ansprüche 13 bis 15, wobei die Vorrichtung (3) bezogen auf einen Durchmesser (D) der Achse oder Welle (2) des Schienenfahrzeugs ein Verhältnis von Durchmesser (D) zu Höhe (H) zu Breite (B) der Vorrichtung (3) von 4:1:2 und/oder wobei die Vorrichtung (3) unter Berücksichtigung einer Breite (S) eines zur Befestigung der Vorrichtung (3) vorgesehenen Stahlbandes ein Verhältnis von Durchmesser (D) zu Höhe (H) zu Breite (B) der Vorrichtung (3) zu Breite (S) des Stahlbandes von 6:1.5:3.3:1 aufweisen kann.

17. Vorrichtung nach einem der vorhergehenden Ansprüche, wobei die Vorrichtung (3) eine autonome Laufzeit von 6 oder 7 Jahren aufweist.

**18.** Vorrichtung nach einem der vorhergehenden Ansprüche, wobei die Vorrichtung (3) eine Einrichtung zur Durchführung von Ortsfilterverfahren und/oder Satellitennavigationsverfahren umfasst.

**19.** Vorrichtung nach einem der vorhergehenden Ansprüche, wobei die Vorrichtung (3) wenigstens einen Temperatursensor, insbesondere einen Infrarotsensor, umfasst.

**20.** Vorrichtung nach Anspruch 19, wobei die Vorrichtung (3) zwei Temperatursensoren, insbesondere Infrarotsensoren, umfasst, die innerhalb der Vorrichtung (3) mit Blickrichtung auf die Radinnenseite angeordnet sind.

**21.** Vorrichtung nach einem der vorhergehenden Ansprüche, wobei die Vorrichtung (3) einen Laufleistungssensor umfasst.

**22.** Vorrichtung nach einem der vorhergehenden Ansprüche, wobei die Vorrichtung (3) einen Sensor zur Ermittlung einer Rotation der Räder (1) umfasst.

**23.** Vorrichtung nach einem der vorhergehenden Ansprüche, wobei die Vorrichtung (3) einen Zeitgeber oder eine Echtzeituhr, welche den Zeitpunkt einer Bewegungsaufnahme angibt, umfasst.

**24.** Vorrichtung nach einem der vorhergehenden Ansprüche, wobei die Vorrichtung (3) einen festen Speicher (ROM, EEPROM), in welchem eine Identifikationsnummer (ID) der Achse oder Welle (2) und/oder des Wagens des Schienenfahrzeugs, insbesondere zur Ausrüstung des Wagens mit dem Radsatz und ihrer Welle beim Hersteller bzw. nach einem Austausch im Servicewerk oder als Indikator für die Bewegungsaufnahme eines Wagens, gespeichert ist, umfasst.

**25.** Vorrichtung nach einem der vorhergehenden Ansprüche, wobei die Vorrichtung (3) einen Beschleunigungssensor umfasst, der als 1-dimensionaler, 2-dimensionaler oder 3-dimensonaler Sensor ausgeführt ist.

**26.** Vorrichtung nach einem der vorhergehenden Ansprüche, wobei die Vorrichtung (3) einen Sensor zur Detektion eines Verlustes des Rad-Schiene-Kontakts, insbesondere zur Detektion einer kontinuierlichen Überlagerung eines Sinussignals mit Störgrößen in allen Achsen teilweise mit periodisch wiederkehrender Signatur in vertikaler Richtung mit konstantem zeitlichem Abstand, umfasst.

**27.** Vorrichtung nach einem der vorhergehenden Ansprüche, wobei die Vorrichtung (3) einen Schwingungsaufnehmer, insbesondere einen Beschleunigungssensor oder ein Körperschallmikrofon, zur Detektion und Analyse der Eigenschwingung der Achse oder Welle (2) umfasst.

**28.** Vorrichtung nach einem der vorhergehenden Ansprüche, wobei der Vorrichtung (3) ein auf der Achse oder Welle (2) angeordnetes Gegengewicht (4) zum Ausgleich und/oder Vermeidung einer Unwucht zugeordnet ist.

**29.** Verfahren zur Überwachung eines Schienenfahrzeugs mit den Schritten: Messen einer statischen Beschleunigung entlang mindestens einer ersten Achse oder Welle (2) einer Fahrzeugachse des Schienenfahrzeugs, Rotieren der mindestens einen ersten Achse oder Welle (2) im Gravitationsfeld der Erde gemäß einer Rotationsbewegung der Räder (1) des Schienenfahrzeugs, so dass sich der der Erdbeschleunigung zuzuordnende Anteil der gemessenen statischen Beschleunigung aufgrund einer Winkeländerung der mindestens einen ersten Achse oder Welle (2) gegenüber dem Gravitationsfeld der Erde ändert, und Bestimmen einer Laufleistung und mindestens eines Fehlerzustandes des Schienenfahrzeugs aus dem Verlauf der gemessenen Beschleunigung.

**30.** Verfahren zum Nachrüsten eines Schienenfahrzeugs mit Rädern (1) mit einer Vorrichtung (3) zur Überwachung des Fahrverhaltens des Schienenfahrzeugs mit den Schritten: Anordnen eines Beschleunigungssensors (21), der eine statische Beschleunigung entlang mindestens einer Achse oder Welle (2) einer Fahrzeugachse des Schienenfahrzeugs bestimmen kann, auf einem rotierenden Körper, so dass sich der Beschleunigungssensor (21) bei einer Rotationsbewegung der Räder (1) des Schienenfahrzeugs derart bewegt, dass sich der der Erdbeschleunigung zuzuordnende Anteil der gemessenen statischen Beschleunigung aufgrund einer Winkeländerung der mindestens einen Achse oder Welle (2) gegenüber dem Gravitationsfeld der Erde ändert, und Anordnen einer Auswerteeinheit (23), die eingerichtet ist, um aus einem Ausgangssignal des Beschleunigungssensors (21), das die vom Beschleunigungssensor (21) gemessene Beschleunigung angibt, eine Laufleistung und mindestens einen Fehlerzustand des Schienenfahrzeugs zu bestimmen.

**Claims**

**1.** Device for monitoring a rail vehicle having wheels (1), comprising: An acceleration sensor (21) being suitable for determining a static acceleration along at least a first axis or shaft (2) of a vehicle axle of the rail vehicle, and an evaluation unit (23), which is set to receive an output signal of the acceleration sensor (21) representing the measured acceleration, and, based on this output signal, to determine a mileage, **characterized in that** the acceleration sensor (21) is disposed on a body rotating proportionally to the vehicle velocity in response to a traveling movement of the rail vehicle such that the acceleration sensor (21) moves such that the proportion of the measured static acceleration to be assigned to the gravity varies due to an angular variation of the at least first axis or shaft (2) with respect to the gravitational field of the earth, and that, based on this output signal, the evaluation unit (23) is set to determine at least one error state of the rail vehicle.

2. Device according to claim 1, wherein said acceleration sensor (21) is disposed on an outer circumference of an axis or a shaft (2) of a vehicle axle of the rail vehicle coupled to one of the wheels (1).

3. Device according to one of claims 1 or 2, wherein the device (3) includes a sensor being suitable for detecting a natural vibration of the axis or the shaft (2) of the vehicle axle of a rail vehicle.

4. Device according to claim 3, wherein the device (3) is further configured to analyze the detected natural vibration with respect to a deviation from a set value and thus to infer a damage to an axis or a shaft (2) or the stress of an axis or a shaft (2) of the vehicle axle of the rail vehicle.

5. Device according to one of the preceding claims, wherein the device (3) is positively coupled to the axis or shaft (2), such that displacement with respect to the axis or shaft (2) does not occur in operation of the rail vehicle and/or such that is entrained with a rotation movement of the axis or shaft (2) upon rotation of the axis or shaft (2).

6. Device according to one of the preceding claims, wherein the device (3) can be attached to the axis or shaft (2) by means of one or more attachment bands wound around the axis or shaft (2), in particular a band of steel.

7. Device according to claim 6, wherein a side of the device (3) facing the axis or shaft (2) and/or of the attachment band has/have knobs or is/are configured in the manner of a tire profile and/or wherein a layer of a plastic material or polymer is inserted between the axis or shaft (2) and the attachment band.

8. Device according to claim 7, wherein the knobs or the tire profile is/are configured such that the drain of liquid from the axis or shaft (2) is promoted.

9. Device according to one of the preceding claims, wherein the device (3) can be coupled to the axis or shaft (2) such that notch effect does not occur on the axis or shaft (2).

10. Device according to claim 9, wherein a varnish layer is arranged on the axis or shaft (2) and/or wherein the device (3) or the attachment band has a material that is softer than a varnish layer on the axis or shaft (2) and/or than a steel of the axis or shaft (2).

11. Device according to one of the preceding claims, wherein the device (3) can be displaced in axial direction laterally to the edge of the rail vehicle on the axis or shaft (2).

12. Device according to one of the preceding claims, wherein the device (3) comprises electronics, location filters, brake and/or temperature sensors, infrared and/or distance sensors, a movement sensor, vibration sensor, acceleration sensor and/or an evaluation electronics.

13. Device according to one of the preceding claims, wherein the device (3) is configured such that torsional forces as low as possible on the device (3) can be produced.

14. Device according to claim 13, wherein the device (3) has an extension towards the axis or shaft (2), in particular along the central axis of the shaft (2), being as small as possible.

15. Device according to one of claims 13 or 14, wherein the device (3) has a ratio of height (H) to width (B) of the device (3) being not smaller than 1:2 and in operation maximally protrudes from the axis or shaft (2) in radial direction only half as far the device (3) extends in axial direction of the axis or shaft (2).

16. Device according to one of claims 13 to 15, wherein the device (3), with respect to a diameter (D) of the axis or shaft (2) of the rail vehicle, can have a ratio of diameter (D) to height (H) to width (B) of the device (3) of 4:1:2 and/or wherein the device (3), considering a width (S) of a steel band provided for the attachment of the device (3), can have a ratio of diameter (D) to height (H) to width (B) of the device (3) to width (S) of the steel band of 6:1.5:3.3:1.

17. Device according to one of the preceding claims, wherein the device (3) has an autonomous runtime of 6 or 7 years.

18. Device according to one of the preceding claims, wherein the device (3) comprises a device for carrying out location filtering methods and/or satellite navigation methods.

19. Device according to one of the preceding claims, wherein the device (3) comprises at least a temperature sensor, in particular an infrared sensor.

20. Device according to claim 19, wherein the device (3) comprises two temperature sensors, in particular infrared sensors being arranged within the device (3) with line of sight to the wheel inner side.

21. Device according to one of the preceding claims, wherein the device (3) comprises a mileage sensor.

22. Device according to one of the preceding claims, wherein the device (3) comprises a sensor for detecting a rotation of the wheels (1).

23. Device according to one of the preceding claims, wherein the device (3) comprises a timer or a real time clock, indicating the point of time of the start of movement.

24. Device according to one of the preceding claims, wherein the device (3) comprises a permanent memory (ROM, EEPROM), in which an identification number (ID) of the axis or shaft (2) and/or of the wagon of the rail vehicle is stored, in particular for equipping of the wagon with the wheel set and its shaft at the manufacturer or after replacement in the service factory or for using as indicator for the start of movement of a wagon.

25. Device according to one of the preceding claims, wherein the device (3) comprises an acceleration sensor, which is designed as a 1-dimensional, 2-dimensional or 3-dimensonal sensor.

26. Device according to one of the preceding claims, wherein the device (3) comprises a sensor for detecting of a loss of the wheel-rail contact, in particular for detecting of a continuous superposition of a sinusoidal signal with disturbance values in all axes partially with periodically recurring signature in vertical direction with constant distance of time.

27. Device according to one of the preceding claims, wherein the device (3) comprises a vibration pickup, in particular an acceleration sensor or a structure-borne sound microphone, for detecting and analyzing the natural vibration of the axis or shaft (2).

28. Device according to one of the preceding claims, wherein the device (3) is provided with a counterweight (4) arranged on the axis or shaft (2) for balancing and/or avoiding of an imbalance.

29. Method for monitoring a rail vehicle comprising the steps of: measuring a static acceleration along at least one first axis or shaft (2) of a vehicle axle of the rail vehicle, rotating the at least first axis or shaft (2) in the gravitational field of the earth according to a rotation movement of the wheels (1) of the rail vehicle such that the proportion of the measured static acceleration to be assigned to gravity varies due to an angular variation of the at least first axis or shaft (2) with respect to the gravitational field of the earth, and determining a mileage and at least one error state of the rail vehicle from the progress of the measured acceleration.

30. Method for retrofitting a rail vehicle having wheels (1) with a device (3) for monitoring the traveling behavior of the rail vehicle comprising the steps of: Disposing an acceleration sensor (21), which can determine a static acceleration along at least one axis or shaft (2) of a vehicle axle of the rail vehicle, on a rotating body such that the acceleration sensor (21) moves upon rotation movement of the wheels (1) of the rail vehicle such that the proportion of the measured static acceleration to be assigned to gravity varies due to an angular variation of the at least one axis or shaft (2) with respect to the gravitational field of the earth, and providing an evaluation unit (23), which is set to determine a mileage and at least one error state of the rail vehicle from an output signal of the acceleration sensor (21) indicating the acceleration measured by the acceleration sensor (21).

**Revendications**

1. Dispositif pour la surveillance d'un véhicule ferroviaire avec des roues (1), incluant: Un capteur d'accélération (21) qui est adapté à déterminer une accélération statique le long d'au moins un premier axe ou arbre (2) d'un essieu du véhicule ferroviaire, et une unité d'évaluation (23) qui est conçue pour recevoir un signal de sortie du capteur d'accélération (21) qui représente l'accélération mesurée et, en se basant sur ce signal de sortie, pour déterminer une puissance de déplacement, **caractérisé en ce que** le capteur d'accélération (21) est agencé sur un corps en rotation proportionnelle à la vitesse du véhicule en réaction à un mouvement de déplacement du véhicule ferroviaire, de telle façon que le capteur d'accélération (21) se déplace de manière telle que la part, attribuée à l'accélération terrestre, de l'accélération statique mesurée, se modifie, en raison d'une modification angulaire dudit au moins un premier axe ou arbre (2), par rapport au champ de gravitation terrestre, et **en ce que** l'unité d'évaluation (23) est conçue, en se basant sur le signal de sortie, pour déterminer au moins un état d'erreur du véhicule ferroviaire.

2. Dispositif selon la revendication 1, dans lequel le capteur d'accélération (21) est agencé sur une périphérie extérieure d'un axe ou d'un arbre (2), couplé à l'une des roues (1), d'un essieu du véhicule ferroviaire.

3. Dispositif selon l'une des revendications 1 ou 2, dans lequel le dispositif (3) contient un capteur qui est adapté à détecter une oscillation propre de l'axe ou de l'arbre (2) de l'essieu du véhicule ferroviaire.

4. Dispositif selon la revendication 3, dans lequel le dispositif (3) est en outre conçu pour analyser l'oscillation propre détectée à l'égard d'un écart par rapport à une valeur de consigne et ainsi pour conclure quant à un endommagement d'un axe ou d'un arbre (2) ou quant à la charge d'un axe ou d'un arbre (2) de l'essieu du véhicule ferroviaire.

5. Dispositif selon l'une des revendications précédentes, dans lequel le dispositif (3) est susceptible d'être couplé en coopération de forces à l'axe ou à l'arbre (2), de telle façon qu'il ne peut se produire aucun décalage par rapport à l'axe ou à l'arbre (2) au fonctionnement du véhicule ferroviaire et/ou, lors d'une rotation de l'axe ou de l'arbre, qu'il peut être entraîné conjointement avec le mouvement de rotation de l'axe ou de l'arbre (2).

6. Dispositif selon l'une des revendications précédentes, dans lequel le dispositif (3) est susceptible d'être fixé sur l'axe ou sur l'arbre (2) au moyen d'une ou de plusieurs bandes de fixation enroulées autour de l'axe de l'arbre (2), en particulier d'une bande d'acier.

7. Dispositif selon la revendication 6, dans lequel un côté du dispositif (3) et/ou de la bande de fixation, tourné vers l'axe ou vers l'arbre (2), comprend des protubérances, ou bien est conçu à la manière d'une bande de roulement, et/ou dans lequel une couche d'une matière plastique ou d'un polymère est introduite entre l'axe ou l'arbre (2) et la bande de fixation.

8. Dispositif selon la revendication 7, dans lequel les protubérances ou la bande de roulement est/sont conçue(s) de telle façon qu'une évacuation de liquide depuis l'axe ou l'arbre (2) est favorisée.

9. Dispositif selon l'une des revendications précédentes, dans lequel le dispositif (3) est susceptible d'être couplé à l'axe ou à l'arbre (2), de telle façon qu'il ne se produit aucun effet d'entaille sur l'axe ou sur l'arbre (2).

10. Dispositif selon la revendication 9, dans lequel une couche de vernis est appliqué à l'axe ou à l'arbre (2) et/ou le dispositif (3) ou la bande de fixation comprend un matériau qui est plus souple qu'une couche de vernis sur l'axe ou sur l'arbre (2) et/ou qu'un acier de l'axe ou de l'arbre (2).

11. Dispositif selon l'une des revendications précédentes, dans lequel le dispositif (3) peut être agencé de façon décalée sur l'axe ou sur l'arbre (2) en direction axiale latéralement vers la bordure du véhicule ferroviaire.

12. Dispositif selon l'une des revendications précédentes, dans lequel le dispositif (3) inclut une unité électronique, des filtres spatiaux, des capteurs de freinage et/ou de température, des capteurs infrarouges et/ou des capteurs de distance, un capteur de déplacement, capteur de vibration, capteur d'accélération et/ou unité électronique d'évaluation.

13. Dispositif selon l'une des revendications précédentes, dans lequel le dispositif (3) est susceptible d'être conçu de telle façon que des forces de torsion aussi faibles que possible sont susceptibles d'être engendrées sur le dispositif (3).

14. Dispositif selon la revendication 13, dans lequel le dispositif (3) présente une extension aussi faible que possible en direction de l'axe ou de l'arbre (2), en particulier le long de l'axe central de l'arbre (2).

15. Dispositif selon la revendication 13 ou 14, dans lequel le dispositif (3) présente un rapport de la hauteur (H) sur la largeur (B) du dispositif (3) qui n'est pas inférieur à 1:2, et lors de l'installation en direction radiale, il dépasse au maximum seulement moitié moins loin de l'axe ou de l'arbre (2) que le dispositif (3) s'étend en direction axiale de l'axe ou de l'arbre (2).

16. Dispositif selon l'une des revendications 13 à 15, dans lequel le dispositif (3) présente, par référence à un diamètre (D) de l'axe ou de l'arbre (2) du véhicule ferroviaire, un rapport du diamètre (D) sur la hauteur (H) sur la largeur (B) du dispositif (3) de 4:1:2 et/ou dans lequel le dispositif (3) présente, en tenant compte d'une largeur (S) d'une bande d'acier prévue pour la fixation du dispositif (3), un rapport du diamètre (D) sur la hauteur (H) sur la largeur (B) du dispositif (3) par rapport à la largeur (S) de la bande d'acier de 6:1,5:3,3:1.

17. Dispositif selon l'une des revendications précédentes, dans lequel le dispositif (3) présente un temps de fonctionnement autonome de six ou sept années.

18. Dispositif selon l'une des revendications précédentes, dans lequel le dispositif (3) inclut un système pour la mise en oeuvre de procédés de filtrage spatiaux et/ou de procédés de navigation par satellite.

19. Dispositif selon l'une des revendications précédentes, dans lequel le dispositif (3) inclut au moins un capteur de température, en particulier un capteur à infrarouge.

20. Dispositif selon la revendication 19, dans lequel le dispositif (3) inclut deux capteurs de température, en particulier des capteurs infrarouges, qui sont agencés à l'intérieur du dispositif (3) en regard du côté intérieur de la roue.

21. Dispositif selon l'une des revendications précédentes, dans lequel le dispositif (3) inclut un capteur de puissance de déplacement.

22. Dispositif selon l'une des revendications précédentes, dans lequel le dispositif (3) inclut un capteur pour détecter une rotation des roues (1).

23. Dispositif selon l'une des revendications précédentes, dans lequel le dispositif (3) inclut une horloge ou une horloge en temps réel, qui indique l'instant d'un enregistrement du déplacement.

24. Dispositif selon l'une des revendications précédentes, dans lequel le dispositif (3) inclut une mémoire fixe (ROM, EEPROM), dans laquelle est mémorisé un numéro d'identification (ID) de l'axe ou de l'arbre (2) et/ou du wagon du véhicule ferroviaire, en particulier pour l'équipement du wagon avec le jeu de roue et son arbre auprès du fabricant ou respectivement après un échange dans l'usine d'entretien, ou encore à titre d'indicateur pour l'enregistrement du mouvement d'un wagon.

25. Dispositif selon l'une des revendications précédentes, dans lequel le dispositif (3) inclut un capteur d'accélération, qui est réalisé sous forme de capteur monodimensionnel, bidimensionnel ou tridimensionnel.

26. Dispositif selon l'une des revendications précédentes, dans lequel le dispositif (3) comprend un capteur pour la détection d'une perte de contact roue/rail, en particulier pour la détection d'une superposition continue d'un signal sinusoïdal avec des grandeurs parasites dans tous les axes, partiellement avec une signature à répétition périodique en direction verticale avec un écart temporel constant.

27. Dispositif selon l'une des revendications précédentes, dans lequel le dispositif (3) inclut un enregistreur d'oscillation, en particulier un capteur d'accélération ou un microphone de sonorité corporelle, en vue de la détection et de l'analyse de l'oscillation propre de l'axe ou de l'arbre (2).

28. Dispositif selon l'une des revendications précédentes, dans lequel un contrepoids (4) agencé sur l'axe ou sur l'arbre (2) est associé au dispositif (3) pour compenser et/ou pour éviter un balourd.

29. Procédé pour la surveillance d'un véhicule ferroviaire comprenant les étapes consistant à:
Mesurer une accélération statique le long d'au moins un premier axe ou arbre (2) d'un essieu du véhicule ferroviaire, mettre en rotation ledit au moins un premier axe ou arbre (2) dans le champ de gravitation terrestre selon un mouvement de rotation des roues (1) du véhicule ferroviaire, de sorte que la part de l'accélération statique mesurée à attribuer à l'accélération terrestre varie en raison d'une modification angulaire dudit au moins un premier axe ou arbre (2) par rapport au champ de gravitation terrestre, et déterminer une puissance de déplacement et au moins un état d'erreur du véhicule ferroviaire à partir de l'évolution de l'accélération mesurée.

30. Procédé pour rééquiper un véhicule ferroviaire avec des roues (1) avec un dispositif (3) pour la surveillance du comportement de déplacement du véhicule ferroviaire comprenant les étapes consistant à:

Agencer un capteur d'accélération (21), qui est susceptible de déterminer une accélération statique le long d'au moins un axe ou arbre (2) d'un essieu du véhicule ferroviaire, sur un corps en rotation, de sorte que le capteur d'accélération (21) se déplace, lors d'un mouvement de rotation des roues (1) du véhicule ferroviaire de telle façon que la part, attribuée à l'accélération terrestre, de l'accélération statique mesurée, varie en raison d'une modification angulaire dudit au moins un axe ou arbre (2) par rapport au champ de gravitation terrestre, et
agencer une unité d'évaluation (23), qui est conçue pour déterminer, à partir d'un signal de sortie du capteur d'accélération (21) qui indique l'accélération mesurée par le capteur d'accélération (21), une puissance de déplacement et au moins un état d'erreur du véhicule ferroviaire.

Bewegungsrichtung

zurück            vorwärts

1

2    3

5

Untergrund

# Fig. 1

Aufbau / Schienenfahrzeug

1

1

2

Sensor

3

Untergrund 5

**Fig. 2**

**Fig. 3**

**Fig. 4**

**Fig. 5**

**Fig. 6**

B
(100,00)

27

29

252

241

D-Zelle
26

3

S
(30)

Welle
2

245

Gegengewicht
4

Fig. 7

Fig. 8

**Fig. 9**

**Fig. 10**

Fig. 11

Fig. 12

Fig. 13

Vorwärtsfahrt

Fig. 14

Rückwärtsfahrt

Fig. 15

Schaden am rotierenden Teil

Zeit t bzw. Drehwinkel ω

▨▨▨ x-Achse          ▬▬▬ z-Achse

Fig. 16

Schaden am Untergrund

Zeit t bzw. Drehwinkel ω

x-Achse    z-Achse

# Fig. 17

Stoß in horizontaler Richtung
z.B. Rangierstoß

Fig. 18

Bewegung bei stehender Welle
z. B. Fahrt mit Bremse

Fig. 19

Entgleisung

Fig. 20

Fig. 21

EP 2 432 669 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004022406 A